(19) Europäisches Patentamt / European Patent Office / Office européen des brevets

(11) **EP 4 001 324 A1**

(12) **EUROPEAN PATENT APPLICATION**
published in accordance with Art. 153(4) EPC

(43) Date of publication:
**25.05.2022  Bulletin 2022/21**

(21) Application number: **20844891.0**

(22) Date of filing: **05.06.2020**

(51) International Patent Classification (IPC):
$C08F\ 20/18^{(2006.01)}$          $C08C\ 1/15^{(2006.01)}$
$C08L\ 33/08^{(2006.01)}$          $C08L\ 33/10^{(2006.01)}$

(52) Cooperative Patent Classification (CPC):
**C08C 1/15; C08F 20/18; C08L 33/08; C08L 33/10**

(86) International application number:
**PCT/JP2020/022319**

(87) International publication number:
**WO 2021/014796 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.07.2019   JP 2019134148**

(71) Applicant: **Zeon Corporation
Tokyo 100-8246 (JP)**

(72) Inventors:
• **MASUDA, Hirofumi
  Tokyo 100-8246 (JP)**
• **TSUNEKUNI, Nobuhiro
  Kurashiki-shi, Okayama 713-8103 (JP)**

(74) Representative: **Maiwald Patent- und
Rechtsanwaltsgesellschaft mbH
Elisenhof
Elisenstraße 3
80335 München (DE)**

(54) **ACRYLIC RUBBER BALE HAVING EXCELLENT STORAGE STABILITY AND WATER RESISTANCE**

(57)    An acrylic rubber bale excellent in storage stability and water resistance and a method for producing the same are provided. An acrylic rubber bale, including an acrylic rubber having a reactive group, with a specific ash content, a large proportion of magnesium and phosphorus in the ash, and a specific ratio of magnesium and phosphorus, is highly excellent in storage stability and water resistance. This acrylic rubber bale can be produced by using a specific stabilizer and a specific coagulant in an emulsion polymerization process of an acrylic rubber and performing a process from coagulation process to baling process under specific conditions.

**Description**

[FIELD OF THE INVENTION]

The present invention relates to an acrylic rubber bale and a method for producing the same, a rubber mixture and a method for producing the same, and a rubber cross-linked product, more specifically, an acrylic rubber bale excellent in storage stability and water resistance, a method for producing the same, a rubber mixture including the acrylic rubber bale, a method for producing the same, and a rubber cross-linked product obtained by cross-linking the same.

Acrylic rubber is a polymer mainly composed of acrylic acid ester and is generally known as rubber excellent in heat resistance, oil resistance, and ozone resistance, and is widely used in fields related to automobiles. Such acrylic rubber is usually commercialized by emulsion-polymerizing the monomer components constituting the acrylic rubber, bringing the obtained emulsion- polymerized liquid into contact with a coagulant, drying the resulting hydrous crumbs, and thereafter baling the dried crumbs.

Related to an acrylic rubber, for example, Patent Document 1 (Japanese patent application publication 2006-328239) discloses a method for producing a rubber polymer comprising: a process to obtain a crumb slurry containing a crumb-shaped rubber polymer by bringing a polymer latex into contact with a coagulant liquid; a process to crush the crumb-shaped rubber slurry contained in the crumb slurry by a mixer having a stirring and crushing function with a stirring power of 1 kW/m$^3$ or greater; a dehydration process to obtain crumb-like rubber polymer by removing water from the crumb slurry obtained by crushing the crumb-like rubber polymer; and a process to heat and dry the crumb-shaped rubber polymer from which water has been removed, wherein the dried crumb is introduced into a baler in a form of flakes and compressed into bales. An unsaturated nitrile-conjugated diene copolymer latex obtained by emulsion polymerization is specifically shown as a rubber polymer to be used here, and it is shown to be applicable to polymers composed only of acrylates such as ethyl acrylate / n-butyl acrylate copolymer, ethyl acrylate / n-butyl acrylate / 2-methoxyethyl acrylate copolymer. However, there is a problem that such an acrylic rubber composed of only acrylate is inferior in cross-linked rubber properties such as heat resistance and compression set resistance.

As the acrylic rubber having a reactive group excellent in heat resistance and compression set resistance, for example, Patent Document 2 (International Publication WO2018/116828 Pamphlet) discloses a method in which a monomer component consisting of ethyl acrylate, n-butyl acrylate and mono-n-butyl fumarate is emulsified with sodium lauryl sulfate as emulsifier, polyethylene glycol monostearate and water, emulsion polymerization is performed in the presence of a polymerization initiator until the polymerization conversion rate reaches 95% to obtain acrylic rubber latex, and add the acrylic rubber latex to an aqueous solution of magnesium sulfate and dimethylamine-ammonia-epichlorohydrin polycondensate which is a polymer flocculant, and thereafter the mixture is stirred at 85°C to form a crumb slurry, and then after once washing the slurry with water, the entire amount thereof is passed through a 100-mesh wire net to capture only the solid content, thereby to collect crumb-shaped acrylic rubber. Patent Document 2 describes that, according to this method, the obtained crumbs in a hydrous state are dehydrated by centrifugation or the like, dried at 50 to 120°C by a band dryer or the like, and introduced into a baler to be compressed and baled. However, in such a method, there are a problem that a large amount of semi-coagulated hydrous crumbs are generated in the coagulation reaction so that the generated crumbs adhere to the coagulation tank, a problem that the coagulant and the emulsifier cannot be sufficiently removed by washing, and a problem that even if the bale is produced, storage stability and water resistance are poor.

Further, Patent Document 3 (International Publication WO2018/079783 Pamphlet) discloses a method for producing an acrylic rubber, in which, a monomer component including ethyl acrylate, n-butyl acrylate, and mono-n-butyl fumarate is emulsified using an emulsifier including pure water, sodium lauryl sulfate and polyoxyethylene dodecyl ether, emulsion polymerization is performed in the presence of a polymerization initiator up to a polymerization conversion rate of 95% by weight to obtain an emulsion polymerization solution, and sodium sulfate is continuously added to produce hydrous crumbs, and subsequently, the produced hydrous crumbs are washed with industrial water 4 times, once with acidic water of pH3, and once with pure water, and then dried with a hot air dryer at 110°C for 1 hour, thereby to produce an acrylic rubber excellent in water resistance (assessed by volume change after immersion in 80°C distilled water for 70 hours) with a small residual amount of the emulsifier and the coagulant. However, Patent Document 3 has no description of using in the form of a bale, and there is a problem that handling a sticky acrylic rubber in the form of a crumb has poor workability and storage stability. Further, regarding water resistance, a high degree of water resistance is required in a more severe environment.

On the other hand, regarding the production of sheet-shaped acrylic rubber, for example, Patent Document 4 (Japanese Patent Application Publication H1-225512) discloses a method to supply a nitrile rubber (NBR) crumb with a water content of about 50% to the feed barrel, suck and remove the residual water and evaporated vaporized material in the vacuum barrel, after dehydrating most of the water in the dehydration barrel, and continuously extrude into a strip through the breaker plate and the die portion, by using a biaxial extrusion drying provided with a feed barrel, a dehydration barrel, a standard barrel, a vent barrel, and a vacuum barrel, and describes that acrylic rubber crumbs are used as the applied rubber crumbs. However, this patent document does not describe baling using such an acrylic rubber sheet.

[CITATION LIST]

[PATENT LITERATURE]

[Patent Document 1] Japanese Patent Application Publication 2006-328239
[Patent Document 2] International Publication WO2018/116828 Pamphlet
[Patent Document 3] International Publication WO2018/079783 Pamphlet
[Patent Document 4] Japanese Patent Application Publication H1-225512

[SUMMARY OF THE INVENTION]

[TECHNICAL PROBLEM]

The present invention has been made in consideration of such actual situation, and the present invention is aimed to provide an acrylic rubber bale having excellent storage stability and water resistance, a method for producing the same, a rubber mixture containing the acrylic rubber bale, a method for producing the same, and its rubber cross-linked product.

[MEANS TO SOLVE THE PROBLEM]

As a result of diligent studies conducted by the present inventors in view of the above problems, the present inventors have found out that an acrylic rubber bale, including an acrylic rubber having a reactive group, containing a specific ash content or less, having a small amount of air entrapment and a large specific gravity, has a highly excellent storage stability and water resistance.

The present inventors have also found out that by specifying the content and composition ratio of specific components in ash, molecular weight distribution focusing on molecular weight and high molecular weight region, complex viscosity at 60°C and 100°C, gel amount and water content of methyl ethyl ketone insoluble matter, the storage stability and water resistance of the acrylic rubber bale are further improved.

Further, the inventors of the present invention have found out that such an acrylic rubber bale can easily produce a hydrous crumb produced by contacting an emulsion polymerization solution obtained by emulsion polymerization of a monomer component containing a (meth) acrylic acid ester and a reactive group-containing monomer with a coagulant liquid, by extruding the hydrous crumb into a sheet after dehydration and drying using a specific screw-type extruder, and laminating it.

Still further, the inventors according to the present invention have found out that an acrylic rubber bale with excellent storage stability and water resistance can be produced more efficiently, by specifying emulsifier and coagulant, contact method and stirring peripheral speed of emulsion polymerization liquid and coagulant liquid in coagulation process, temperature of drying barrel section of screw-type extruder, resin pressure of die portion, cutting temperature of a sheet-shaped dry rubber, and lamination temperature of the sheet-shaped dry rubber.

The present inventors have completed the present invention based on these findings.

Thus, according to the present invention, there is provided an acrylic rubber bale, comprising an acrylic rubber having a reactive group, wherein an ash content is 0.2% by weight or less, a ratio of a total content of at least one element selected from the group consisting of sodium, sulfur, calcium, magnesium, and phosphorus in the ash with respect to the total ash content is at least 50% by weight, a specific gravity is 0.9 or more.

In a desirable embodiment of the acrylic rubber bale of the present invention, the specific gravity is preferably in the range of 1 to 1.2.

In a desirable embodiment of the acrylic rubber bale of the present invention, a total amount of sodium and sulfur in the ash is preferably 50% by weight or more with respect to the total ash content.

In a desirable embodiment of the acrylic rubber bale of the present invention, it is more preferable that a total amount of sodium and sulfur in the ash is 90% by weight or more with respect to the total ash content.

In a desirable embodiment of the acrylic rubber bale of the present invention, the ratio of sodium to sulfur in the ash ([Na] / [S]) is preferably in the range of 0.4 to 2.5 by weight.

In a desirable embodiment of the acrylic rubber bale of the present invention, the ratio of sodium to sulfur in the ash ([Na] / [S]) is more preferably in the range of 0.7 to 1 by weight.

In a desirable embodiment of the acrylic rubber bale of the present invention, the weight average molecular weight (Mw) of the acrylic rubber is preferably in the range of 100,000 to 5,000,000. Then, the ratio (Mz / Mw) of the z average molecular weight (Mz) and the weight average molecular weight (Mw) of the acrylic rubber is preferably 1.3 or more.

In a desirable embodiment of the acrylic rubber bale of the present invention, the complex viscosity ($[\eta]$ 60°C) at 60°C is preferably 15,000 Pa·s or less, and the ratio ($[\eta]$ 100°C / $[\eta]$ 60°C) of the complex viscosity ($[\eta]$ 100°C) at 100°C to the complex viscosity ($[\eta]$ 60°C) at 60°C is preferably 0.5 or more.

In a desirable embodiment of the acrylic rubber bale of the present invention, the ratio ($[\eta]$ 100°C / $[\eta]$ 60°C) of the complex viscosity ($[\eta]$ 100°C) at 100°C to the complex viscosity ($[\eta]$ 60°C) at 60°C is more preferably 0.83 or more.

Further, in a desirable embodiment of the acrylic rubber bale of the present invention, the amount of gel insoluble in methyl ethyl ketone is preferably 50% by weight or less.

Further, in a desirable embodiment of the acrylic rubber bale of the present invention, the water content is preferably less than 1% by weight.

According to the present invention, there is provided a method for producing an acrylic rubber bale, the method comprising: an emulsion polymerization process to emulsify a monomer component containing a (meth) acrylic acid ester and a monomer having a reactive group with water and an emulsifier, and to emulsion-polymerize the emulsified monomer component in the presence of a polymerization catalyst to obtain an emulsion polymerization liquid; a coagulation process to generate hydrous crumbs by contacting the obtained emulsion polymerization liquid with a coagulant liquid consisting of an aqueous solution of a coagulant; a washing process to wash the generated hydrous crumbs; a dehydration/drying/molding process to dehydrate the washed hydrous crumbs to a water content of 1 to 40% by weight in a dehydration barrel, to dry the dehydrated hydrous crumbs to obtain a dry rubber having a water content of less than 1% by weight in a drying barrel, and to extrude a sheet-shaped dry rubber from a die, by using a screw-type extruder provided with the dehydration barrel having a dehydration slit, the drying barrel under reduced pressure, and the die at a top thereof; and a baling process to laminate and bale the extruded sheet-shaped dry rubber.

In a desirable embodiment of the method for producing an acrylic rubber bale of the present invention, it is preferable that the emulsifier is a sulfate ester salt and the coagulant is a sodium salt.

In a desirable embodiment of the method for producing an acrylic rubber bale of the present invention, it is preferable that the contact between the emulsion polymerization solution and the coagulant liquid is achieved by adding the emulsion polymerization solution to the coagulant liquid being stirred.

In a desirable embodiment of the method for producing an acrylic rubber bale of the present invention, the peripheral speed of the coagulant liquid being stirred is preferably 0.5 m/s or more.

In a desirable embodiment of the method for producing an acrylic rubber bale of the present invention, the temperature of the hydrous crumb supplied to the screw-type extruder is preferably in the range of 50 to 90°C.

In a desirable embodiment of the method for producing an acrylic rubber bale of the present invention, the degree of decompression of the drying barrel section of the screw-type extruder is preferably in the range of 1 to 50 kPa.

In a desirable embodiment of the method for producing an acrylic rubber bale of the present invention, the set temperature of the drying barrel section of the screw-type extruder is preferably 100 to 250°C.

In a desirable embodiment of the method for producing an acrylic rubber bale of the present invention, the resin pressure of the die portion of the screw-type extruder is preferably in the range of 0.1 to 10 MPa.

In a desirable embodiment of the method for producing an acrylic rubber bale of the present invention, it is preferable that the sheet-shaped dry rubber is laminated after the sheet-shaped dry rubber is cut.

In a desirable embodiment of the method for producing an acrylic rubber bale of the present invention, it is preferable that the sheet-shaped dry rubber is cut at a sheet-shaped dry rubber temperature of 60°C or lower.

In a desirable embodiment of the method for producing an acrylic rubber bale of the present invention, it is preferable that the sheet-shaped dry rubber is laminated at a sheet-shaped dry rubber temperature of 30°C or higher.

According to the present invention, there is also provided a rubber mixture obtained by mixing a filler and a cross-linking agent with the acrylic rubber bale.

According to the present invention, there is also provided a method for producing a rubber mixture, which comprises mixing a filler and a cross-linking agent with the acrylic rubber bale with a mixer.

According to the present invention, there is also provided a method for producing a rubber mixture in which the acrylic rubber bale and the filler are mixed and then the cross-linking agent is mixed.

Further, according to the present invention, a rubber cross-linked product obtained by cross-linking the rubber mixture is provided.

[EFFECT OF THE INVENTION]

According to the present invention, an acrylic rubber bale having excellent storage stability and water resistance, a method for producing the same, a rubber mixture containing the acrylic rubber bale, a method for producing the same, and a rubber cross-linked product are provided.

[BRIEF DESCRIPTION OF THE DRAWINGS]

FIG. 1 is a diagram schematically showing an example of an acrylic rubber production system usable for producing an acrylic rubber bale according to an embodiment of the present invention.
FIG. 2 is a diagram showing a configuration of the screw-type extruder of FIG. 1.
FIG. 3 is a diagram showing a configuration of a carrier-type cooling device used as the cooling device of FIG. 1.

[DETAILED DESCRIPTION OF EMBODIMENTS]

The acrylic rubber bale of the present invention comprises an acrylic rubber having a reactive group, wherein an ash content is 0.2% by weight or less, and a total amount of at least one element selected from the group consisting of sodium, sulfur, calcium, magnesium and phosphorus in the ash is at least 50% by weight as a ratio with respect to the total ash content, and a specific gravity is 0.9 or more.

<Monomer Component>

The acrylic rubber bale of the present invention comprises an acrylic rubber having a reactive group. The reactive group in the acrylic rubber may be appropriately selected according to the purpose of use, but is preferably at least one functional group selected from the group consisting of a carboxyl group, an epoxy group, and a halogen group, more preferably at least one functional group selected from the group consisting of a carboxyl group, an epoxy group, and a chlorine atom. As the acrylic rubber having such a reactive group, an acrylic rubber may be provided with a reactive group in a post-reaction, but a copolymer of a monomer containing a reactive group is preferable.

The acrylic rubber constituting the acrylic rubber bale of the present invention is preferably an acrylic rubber containing a (meth) acrylic acid ester, and the amount of the (meth) acrylic acid ester in the acrylic rubber is not particularly limited, but the amount is usually 50% by weight or more, preferably 70% by weight or more, more preferably 80% by weight or more. Further, the (meth) acrylic acid ester preferably contains at least one (meth) acrylic acid ester selected from the group consisting of (meth) acrylic acid alkyl ester and (meth) acrylic acid alkoxyalkyl ester. In the present invention, "(meth) acrylic acid ester" is a general term referring the esters of acrylic acid and / or methacrylic acid.

Specific examples of the acrylic rubber having a preferable reactive group include acrylic rubbers including: at least one (meth) acrylic acid ester selected from the group consisting of (meth) acrylic acid alkyl ester and (meth) acrylic acid alkoxyalkyl ester; a monomer containing a reactive group; and other monomer which can be copolymerized as required.

The (meth) acrylic acid alkyl ester is not limited, but it is usually a (meth) acrylic acid alkyl ester having an alkyl group having 1 to 12 carbon atoms, preferably a (meth) acrylic acid alkyl ester having an alkyl group having 1 to 8 carbon atoms, more preferably a (meth) acrylic acid alkyl ester having an alkyl group having 2 to 6 carbon atoms.

Specific examples of the alkyl (meth) acrylate include methyl (meth) acrylate, ethyl (meth) acrylate, n-propyl (meth) acrylate, isopropyl (meth) acrylate, and n-butyl (meth) acrylate, isobutyl (meth) acrylate, n-hexyl (meth) acrylate, 2-ethylhexyl (meth) acrylate, cyclohexyl (meth) acrylate, and the like, preferably ethyl (meth) acrylate, n-butyl (meth) acrylate, and more preferably ethyl acrylate and n-butyl acrylate.

The (meth) acrylic acid alkoxyalkyl ester is not limited, but it is usually a (meth) acrylic acid alkoxyalkyl ester having an alkoxyalkyl group having 2 to 12 carbon atoms, preferably a (meth) acrylic acid alkoxyalkyl ester having an alkoxyalkyl group having 2 to 8 carbon atoms, more preferably a (meth) acrylic acid alkoxyalkyl ester having an alkoxyalkyl group having 2 to 6 carbon atoms.

Specific examples of such (meth) acrylic acid alkoxyalkyl ester include methoxymethyl (meth) acrylate, methoxyethyl (meth) acrylate, methoxypropyl (meth) acrylate, methoxy butyl (meth) acrylate, ethoxymethyl (meth) acrylate, ethoxyethyl (meth) acrylate, propoxyethyl (meth) acrylate, butoxyethyl (meth) acrylate, and the like. Among these, methoxyethyl (meth) acrylate, ethoxyethyl (meth) acrylate and the like are preferable, and methoxyethyl acrylate and ethoxyethyl acrylate are more preferable.

At least one type of (meth) acrylic acid ester selected from the group consisting of these (meth) acrylic acid alkyl esters and (meth) acrylic acid alkoxyalkyl esters may be used alone or in combination of two or more types, the ratio of the (meth) acrylic acid ester in the acrylic rubber is usually 50 to 99.99% by weight, preferably 70 to 99.9% by weight, more preferably 80 to 99.5% by weight, and most preferably 87 to 99% by weight. If the amount of (meth) acrylic acid ester in the monomer component is excessively small, the weather resistance, heat resistance, and oil resistance of the resulting acrylic rubber may decrease, which is not preferable.

The type of the monomer containing a reactive group is not limited and may be appropriately selected according to the purpose of use, but a monomer having at least one functional group selected from the group consisting of a carboxyl group, an epoxy group and a halogen group is preferable, a monomer having at least one functional group selected from the group consisting of a carboxyl group, an epoxy group and a chlorine atom is more preferable.

The monomer having a carboxyl group is not limited, but ethylenically unsaturated carboxylic acid can be preferably used. Examples of the ethylenically unsaturated carboxylic acid include, for example, ethylenically unsaturated monocarboxylic acid, ethylenically unsaturated dicarboxylic acid, ethylenically unsaturated dicarboxylic acid monoester, and the like, and among these, ethylenically unsaturated dicarboxylic acid monoester is particularly preferable, since the said monoester can further improve the compression set resistance property when the acrylic rubber is a rubber cross-linked product.

The ethylenically unsaturated monocarboxylic acid is not limited, but an ethylenically unsaturated monocarboxylic acid having 3 to 12 carbon atoms is preferable, and examples thereof include acrylic acid, methacrylic acid, $\alpha$-ethylacrylic acid, crotonic acid, and cinnamic acid.

The ethylenically unsaturated dicarboxylic acid is not particularly limited, but an ethylenically unsaturated dicarboxylic acid having 4 to 12 carbon atoms is preferable, and examples thereof include: butendioic acid such as fumaric acid and maleic acid; itaconic acid; citraconic acid; and the like. It should be noted that the ethylenically unsaturated dicarboxylic acid also includes those which exist as an anhydride.

The ethylenically unsaturated dicarboxylic acid monoester is not limited, but is usually an ethylenically unsaturated dicarboxylic acid having 4 to 12 carbon atoms and an alkyl monoester having 1 to 12 carbon atoms, preferably an ethylenically unsaturated dicarboxylic acid having 4 to 6 carbon atoms and an alkyl monoester having 2 to 8 carbon atoms, and more preferably a butendionic acid having 4 carbon atoms and an alkyl monoester having 2 to 6 carbon atoms.

Specific examples of such ethylenic unsaturated dicarboxylic acid monoester include: butenedione acid monoalkyl ester such as monomethyl fumarate, monoethyl fumarate, mono-n-butyl fumarate, monomethyl maleate, monoethyl maleate, mono-n-butyl maleate, monocyclopentyl fumarate, monocyclohexyl fumarate, monocyclohexenyl fumarate, monocyclopentyl maleate, monocyclohexyl maleate; and itaconic acid monoalkyl ester such as monomethyl itaconate, monoethyl itaconate, mono-n-butyl itaconate, monocyclohexyl itaconate, and the like. Among these, mono-n-butyl fumarate and mono-n-butyl maleate are preferable, and mono-n-butyl fumarate is particularly preferable.

Examples of the epoxy group-containing monomer include: epoxy group-containing (meth) acrylic acid esters such as glycidyl (meth) acrylate; epoxy group-containing vinyl ethers such as allyl glycidyl ether and vinyl glycidyl ether; and the like.

Examples of the monomer having a halogen group include unsaturated alcohol esters of halogen-containing saturated carboxylic acid, (meth) acrylic acid haloalkyl ester, (meth) acrylic acid haloacyloxyalkyl ester, (meth) acrylic acid (haloacetylcarbamoyloxy) alkyl ester, halogen-containing unsaturated ether, halogen-containing unsaturated ketone, halomethyl group-containing aromatic vinyl compound, halogen-containing unsaturated amide, and haloacetyl group-containing unsaturated monomer, and the like.

Examples of unsaturated alcohol esters of halogen-containing saturated carboxylic acids include vinyl chloroacetate, vinyl 2-chloropropionate, allyl chloroacetate and the like. Examples of the haloalkyl (meth) acrylate ester include chloromethyl (meth) acrylate, 1-chloroethyl (meth) acrylate, 2-chloroethyl (meth) acrylate, 1,2-dichloroethyl (meth) acrylate, 2-chloropropyl (meth) acrylate, 3-chloropropyl (meth) acrylate, 2,3-dichloropropyl (meth) acrylate, and the like. Examples of the haloacyloxyalkyl (meth) acrylate include 2-(chloroacetoxy) ethyl (meth) acrylate, 2-(chloroacetoxy) propyl (meth) acrylate, and 3-(chloroacetoxy) propyl (meth) acrylate, 3-(hydroxychloroacetoxy) propyl (meth) acrylate, and the like.

Specific examples of the (meth) acrylic acid (haloacetylcarbamoyloxy) alkyl ester include 2-(chloroacetylcarbamoyloxy) ethyl (meth) acrylate and 3-(chloroacetylcarbamoyloxy) propyl (meth) acrylate. Specific examples of the halogen-containing unsaturated ether include chloromethyl vinyl ether, 2-chloroethyl vinyl ether, 3-chloropropyl vinyl ether, 2-chloroethyl allyl ether, 3-chloropropyl allyl ether and the like. Specific examples of halogen-containing unsaturated ketones include 2-chloroethyl vinyl ketone, 3-chloropropyl vinyl ketone, 2-chloroethyl allyl ketone, and the like. Specific examples of the halomethyl group-containing aromatic vinyl compound include p-chloromethylstyrene, m-chloromethylstyrene, o-chloromethylstyrene, p-chloromethyl-$\alpha$-methylstyrene, and the like. Specific examples of the halogen-containing unsaturated amide include n-chloromethyl (meth) acrylamide and the like. Specific examples of the haloacetyl group-containing unsaturated monomer include 3-(hydroxychloroacetoxy) propyl allyl ether, p-vinylbenzyl chloroacetic acid ester, and the like.

These monomers containing reactive group are used alone or in combination of two or more, and the ratio in the acrylic rubber is usually 0.01 to 20% by weight, preferably 0.1 to 10% by weight, more preferably 0.5 to 5% by weight, most preferably 1 to 3% by weight.

The other monomer other than the above-mentioned monomer (hereinafter referred to as "other monomer") is not particularly limited as long as it can be copolymerized with the above-mentioned monomer. Specific examples of the other monomer include, for example, olefin-based monomer such as aromatic vinyl, ethylenically unsaturated nitrile, acrylamide monomer, and the like. Specific examples of the aromatic vinyl used as other monomer include styrene, α-methylstyrene, divinylbenzene and the like. Examples of the ethylenically unsaturated nitrile include acrylonitrile, methacrylonitrile, and the like. Specific examples of the acrylamide monomer include acrylamide, methacrylamide, and the like. Specific examples of the other olefinic monomers include ethylene, propylene, vinyl acetate, ethyl vinyl ether, butyl vinyl ether, and the like.

These other monomers as mentioned above may be used alone or in combination of two or more, and the ratio of the other monomers in the acrylic rubber is usually 0 to 30% by weight, preferably 0 to 20% by weight, more preferably 0 to 15% by weight, most preferably 0 to 10% by weight.

<Acrylic Rubber>

The acrylic rubber that constitutes the acrylic rubber bale of the present invention is characterized by having a reactive group in the polymer. The content of the reactive group may be appropriately selected according to the purpose of use, but in terms of the weight ratio of the reactive group itself, when it is usually in the range of 0.001 to 5% by weight, preferably 0.01 to 3% by weight, more preferably 0.05 to 1% by weight, particularly preferably 0.1 to 0.5% by weight, since processability, strength properties, compression set resistance, oil resistance, cold resistance, and water resistance of the acrylic rubber bale are highly well-balanced.

A specific example of the acrylic rubber constituting the acrylic rubber bale of the present invention is an acrylic rubber including at least one (meth) acrylic acid ester selected from (meth) acrylic acid alkyl ester and (meth) acrylic acid alkoxyalkyl ester, a monomer containing a reactive group, and other copolymerizable monomer included as necessary, wherein the ratio of each of them in the acrylic rubber is: the at least one (meth) acrylic acid ester selected from (meth) acrylic acid alkyl ester and (meth) acrylic acid alkoxyalkyl ester is usually in the range of 50 to 99.99% by weight, preferably 70 to 99.9% by weight, more preferably 80 to 99.5% by weight, particularly preferably 87 to 99% by weight; the monomer containing a reactive group is usually in the range of 0.01 to 20% by weight, preferably 0.1 to 10% by weight, more preferably 0.5 to 5% by weight, particularly preferably 1 to 3% by weight; and the other monomer is usually in the range of 0 to 30% by weight, preferably 0 to 20% by weight, more preferably 0 to 15% by weight, particularly preferably 0 to 10% by weight. By setting the ratios of these monomers of the acrylic rubber within these ranges, it is preferable, since the object of the present invention can be highly achieved, and when the acrylic rubber bale is a cross-linked product, the water resistance and compression set resistance properties are remarkably improved.

The weight average molecular weight (Mw) of the acrylic rubber constituting the acrylic rubber bale of the present invention is not limited, but when the molecular weight is, by an absolute value measured by GPC-MALS, usually 100,000 to 5,000,000, preferably 500,000 to 4,000,000, more preferably 700,000 to 3,000,000, most preferably, 1,000,000 to 2,500,000, it is preferable, since processability, strength properties and compression set resistance properties at the time of mixing the acrylic rubber bale are highly well-balanced.

The ratio (Mz / Mw) of the Z-average molecular weight (Mz) and the weight-average molecular weight (Mw) of the acrylic rubber constituting the acrylic rubber bale of the present invention is not limited, but when it is, by an absolute molecular weight distribution measured by GPC-MALS, is usually 1.3 or more, preferably 1.4 to 5, and more preferably 1.5 to 2, it is preferable, since the processability and strength properties of the acrylic rubber bale are highly well-balanced, and changes in physical properties during storage can be mitigated.

The glass transition temperature (Tg) of the acrylic rubber constituting the acrylic rubber bale of the present invention is not limited, but is usually 20°C or lower, preferably 10°C or lower, and more preferably 0°C or lower. Further, the lower limit value of the glass transition temperature (Tg) is not limited, but it is usually -80°C or higher, preferably -60°C or higher, more preferably -40°C or higher. By setting the glass transition temperature (Tg) of the acrylic rubber bale at or above the lower limit temperature, the oil resistance and heat resistance can be more excellent, and by setting the glass transition temperature (Tg) of the acrylic rubber bale at or below the upper limit temperature, the cold resistance and processability can be more excellent.

The content of the acrylic rubber in the acrylic rubber bale of the present invention is appropriately selected according to the purpose of use of the acrylic rubber bale, but it is usually 95% by weight or more, preferably 97% by weight or more, more preferably 98% by weight or more.

<Acrylic Rubber bale>

The acrylic rubber bale of the present invention is characterized in that it includes the above-mentioned acrylic rubber and that the ash content and the ash component and the specific gravity are within the range that satisfy specific conditions.

The ash in the acrylic rubber bale, which is measured according to JIS K6228 A method, is mainly composed of the residue of emulsifier used for emulsion polymerization of monomer components in the production of acrylic rubber and coagulant used for coagulation of emulsion polymerization liquid.

When the ash content of the acrylic rubber bale of the present invention is 0.2% by weight or less, preferably 0.15% by weight or less, more preferably 0.12% by weight or less, particularly preferably 0.11% by weight or less, most preferably 0.1% by weight or less, it is preferable, since it has excellent storage stability and water resistance. The lower limit of the ash content is not limited, but when it is usually 0.0001% by weight or more, preferably 0.0005% by weight or more, more preferably 0.001% by weight or more, particularly preferably 0.005% by weight or more, and most preferably 0.01% by weight or more, it is preferable, since the stickiness to the metal surface is suppressed and workability is excellent.

The ash content that highly balances the storage stability, the water resistance and the anti-stickiness to the metal surface of the acrylic rubber bale of the present invention is usually in the range of 0.0001 to 0.2% by weight, preferably 0.0005 to 0.15% by weight, more preferably 0.001 to 0.12% by weight, particularly preferably 0.005 to 0.11% by weight, most preferably 0.01 to 0.1% by weight.

In the acrylic rubber bale of the present invention, the acrylic rubber bale is excellent in the storage stability and the water resistance, which is preferrable, when content of at least one element selected from the group consisting of sodium, sulfur, calcium, magnesium and phosphorus in total in the afore-mentioned ash is at least 30% by weight, preferably 50% by weight or more, more preferably 70% by weight or more, particularly preferably 80% by weight or more.

Especially, when the total amount of sodium and sulfur in the ash of the acrylic rubber bale of the present invention is usually 30% by weight or more, preferably 50% by weight or more, more preferably 70% by weight or more, particularly preferably 80% by weight or more, most preferably 90% by weight or more, it is preferable, since the storage stability and the water resistance are excellent.

The ratio of sodium to sulfur ([Na] / [S]) in the ash of the acrylic rubber bale of the present invention is not particularly limited, but when it is usually in the range of 0.4 to 2.5, preferably 0.6 to 1.5, and more preferably 0.7 to 1, particularly preferably 0.75 to 0.95, most preferably 0.8 to 0.9, it is preferable, since the water resistance is highly excellent.

The specific gravity of the acrylic rubber bale of the present invention is in the range of at least 0.9 or higher, preferably 0.9 to 1.3, more preferably 0.95 to 1.25, particularly preferably 1.0 to 1.2. An acrylic rubber bale having a high specific gravity is highly excellent in the storage stability, and is preferable.

The water content of the acrylic rubber bale of the present invention is not limited, but when it is usually less than 1% by weight, preferably 0.8% by weight or less, more preferably 0.6% by weight or less, it is preferable, since the vulcanization property is optimized and the properties such as heat resistance and water resistance are highly excellent.

The gel amount of the acrylic rubber bale of the present invention is not limited, but when the amount of insoluble matter in methyl ethyl ketone of the acrylic rubber bale of the present invention is usually 50% by weight or less, preferably 40% by weight or less, more preferably 30% by weight or less, particularly preferably 10% by weight or less, most preferably 5% by weight or less, it is preferable, since the processability is highly improved.

The pH of the acrylic rubber bale of the present invention is not limited, but when it is usually 6 or less, preferably 2 to 6, more preferably 2.5 to 5.5, and particularly preferably 3 to 5, it is preferable, since the storage stability is highly improved.

The complex viscosity ($[\eta]$ 60°C) of the acrylic rubber bale of the present invention at 60°C is not limited, but when it is usually 15,000 Pa·s or less, preferably 2,000 to 10,000 Pa·s, more preferably 2,500 to 7,000 Pa·s, and most preferably 2,700 to 5,500 Pa·s, it is preferable, since the processability, oil resistance, and shape retention are excellent. The complex viscosity ($[\eta]$ 100°C) at 100°C of the acrylic rubber bale of the present invention is not limited, but when it is usually 1,500 to 6,000 Pa·s, preferably 2,000 to 5,000 Pa·s, more preferably 2,500 to 4,000 Pa·s, and most preferably 2,500 to 3,500 Pa·s, it is preferable, since the processability, oil resistance and shape retention are excellent.

The ratio ($[\eta]$ 100°C / $[\eta]$ 60°C) of complex viscosity ($[\eta]$ 100°C) at 100°C and complex viscosity ($[\eta]$ 60°C) at 60°C of the acrylic rubber bale of the present invention is not limited, but it is usually 0.5 or more, preferably 0.6 or more, more preferably 0.7 or more, particularly preferably 0.8 or more, most preferably 0. 83 or more. Further, when the ratio ($[\eta]$ 100°C / $[\eta]$ 60°C) of complex viscosity ($[\eta]$ 100°C) at 100°C and complex viscosity ($[\eta]$ 60°C) at 60°C is usually in the range of 0.5 to 0.99, preferably 0.5 to 0.98, more preferably 0.6 to 0.95, particularly preferably 0.75 to 0.93, most preferably 0.8 to 0.93, it is preferable, since the processability, oil resistance, and shape retention are highly well-balanced.

The Mooney viscosity (ML1+4,100°C) of the acrylic rubber bale of the present invention is not limited, but when it is usually 10 to 150, preferably 20 to 100, more preferably 25 to 70, it is preferable, since the processability and strength properties are highly well-balanced.

The size of the acrylic rubber bale of the present invention is not limited, but it is appropriate that the width is usually in the range of 100 to 800 mm, preferably 200 to 500 mm, more preferably 250 to 450 mm, the length is usually in the range of 300 to 1,200 mm, preferably 400 to 1,000 mm, more preferably 500 to 800 mm, and the height (thickness) is usually in the range of 50 to 500 mm, preferably 100 to 300 mm, more preferably 150 to 250 mm. Further, the shape of the acrylic rubber bale of the present invention is not limited, either, and is appropriately selected according to the purpose of use of the acrylic rubber bale, but in many cases rectangular shape is preferable.

<Method for Producing Acrylic Rubber bale>

The above acrylic rubber bale can be preferably produced by the method for producing of the present invention including the following processes (1) to (5). This means that the acrylic rubber bale can be easily and effectively produced by the method of the present invention, comprising:

(1) an emulsion polymerization process to emulsify a monomer component mainly containing a (meth) acrylic acid ester with water and an emulsifier, and to emulsion-polymerize the emulsified monomer component in the presence of polymerization catalyst to obtain emulsion polymerization liquid;
(2) a coagulation process to contact the obtained emulsion polymerization liquid with a coagulant liquid to generate hydrous crumbs;
(3) a washing process to wash the generated hydrous crumbs;
(4) a dehydration/drying/molding process, using a screw-type extruder provided with a dehydration barrel having a dehydration slit, a drying barrel under reduced pressure, and a die at a top thereof, to dehydrate the washed hydrous crumbs up to a water content of 1 to 40% by weight in the dehydration barrel, and then to dry the dehydrated hydrous crumbs up to a water content of less than 1% by weight in the drying barrel, and to extrude a sheet-shaped dry rubber from the die; and
(5) a baling process to laminate the extruded sheet-shaped dry rubber to be baled.

(Emulsion Polymerization Process)

The emulsion polymerization process of the above (1) in the method for producing an acrylic rubber bale of the present invention is characterized in that a monomer component is emulsified with water and an emulsifier, and the emulsified monomer component is emulsion-polymerized in the presence of polymerization catalyst to obtain emulsion polymerization liquid.

Examples of the emulsifier used in the emulsion polymerization process include, but are not limited to, an anionic emulsifier, a cationic emulsifier, and a nonionic emulsifier, and the like. Among these, the anionic emulsifiers and the nonionic emulsifiers are preferable, and anionic emulsifiers are particularly preferrable.

Examples of the anionic emulsifier include a fatty acid-based emulsifier, a sulfonic acid-based emulsifier, a sulfosuccinic acid-based emulsifier, a sulfuric acid-based emulsifier, a phosphoric acid-based emulsifier, and the like, and a sulfuric acid-based emulsifier is preferable.

Examples of the fatty acid-based emulsifier include sodium octanate, sodium decanoate, sodium laurate, sodium myristate, sodium palmitate, sodium stearate and the like.

Examples of the sulfonic acid-based emulsifier include sodium hexane sulfonate, sodium octane sulfonate, sodium decane sulfonate, sodium toluene sulfonate, sodium cumene sulfonate, sodium octylbenzene sulfonate, sodium dodecylbenzene sulfonate, and ammonium dodecylbenzene sulfonate, sodium naphthalenesulfonate, sodium alkylnaphthalenesulfonate, sodium alkyldiphenyl ether disulfonate, and the like.

Examples of the sulfosuccinic acid-based emulsifier include sodium dioctyl sulfosuccinate, sodium dihexyl sulfosuccinate, and the like.

As the sulfuric acid-based emulsifier, a sulfate ester salt can be preferably used. Examples of the sulfate ester salt include sodium lauryl sulfate, ammonium lauryl sulfate, sodium myristyl sulfate, sodium laureth sulfate, sodium polyoxyethylene alkyl sulfate, sodium polyoxyethylene alkylaryl sulfate, and the like, and sodium lauryl sulfate is particularly preferable.

Examples of the phosphoric acid-based emulsifier include sodium lauryl phosphate, potassium lauryl phosphate, sodium polyoxyalkylene alkyl ether phosphate and the like.

Examples of the cationic emulsifier include alkyl trimethylammonium chloride, dialkylammonium chloride, benzyl ammonium chloride and the like.

Examples of nonionic emulsifiers include: polyoxyalkylene fatty acid esters such as polyoxyethylene stearic acid esters; polyoxyalkylene alkyl ethers such as polyoxyethylene dodecyl ether; polyoxyalkylene alkylphenol ethers such as polyoxyethylene nonylphenyl ether; polyoxyethylene sorbitan alkyl ester. Among these, polyoxyalkylene alkyl ether and polyoxyalkylene alkylphenol ether are preferable, and polyoxyethylene alkyl ether and polyoxyethylene alkylphenol ether are more preferable.

These emulsifiers can be used alone or in combination of two or more, and the amount of the emulsifiers used with respect to 100 parts by weight of the monomer component is usually in the range of 0.01 to 10 parts by weight, preferably 0.1 to 5 parts by weight, more preferably 1 to 3 parts by weight.

The method for mixing the monomer component, water and the emulsifier may be according to a conventional method, and examples thereof include a method of stirring the monomer, the emulsifier and water using a stirrer such as a homogenizer or a disk turbine, and the like. The amount of water used with respect to 100 parts by weight of the monomer component is usually in the range of 10 to 750 parts by weight, preferably 50 to 500 parts by weight, more preferably 100 to 400 parts by weight.

The polymerization catalyst used in the emulsion polymerization process is not limited as long as it is usually used in emulsion polymerization, but, for example, a redox catalyst composed of a radical generator and a reducing agent can be used.

Examples of the radical generator include peroxides and azo compounds, and peroxides are preferable. An inorganic peroxide or an organic peroxide is used as the peroxide.

Examples of the above inorganic peroxides include sodium persulfate, potassium persulfate, hydrogen peroxide, ammonium persulfate and the like. Among these, potassium persulfate, hydrogen peroxide and ammonium persulfate are preferable, and potassium persulfate is particularly preferable.

Examples of the organic peroxide include, for example, 2,2-di(4,4-di-(t-butylperoxy) cyclohexyl) propane, 1-di-(t-hexylperoxy) cyclohexane, 1,1-di-(t-butylperoxy) cyclohexane, 4,4-di-(t-butylperoxy) n-butylvalerate, 2,2-di-(t-butylperoxy) butane, t-butyl hydroperoxide, cumene hydroperoxide, diisopropylbenzene hydroperoxide, paramenthane hydroperoxide, benzoyl peroxide, 1,1,3,3-tetraethyl butyl hydroperoxide, t-butyl cumyl peroxide, di-t-butyl peroxide, di-t-hexyl peroxide, di(2-t-butyl-peroxy-isopropyl) benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl (3-methylbenzoyl) peroxide, diisobutyryl peroxydicarbonate, di-n-propyl peroxydicarbonate, di(2-ethylhexyl) peroxydicarbonate, di-sec-butylperoxydicarbonate, 1,1,3,3-tetramethylbutylperoxyneodecanate, t-hexylperoxypivalate, t-butylperoxyneodecanate, t-hexylperoxypivalate, t-butylperoxypivalate, 2,5-dimethyl-2,5-di(2-ethylhexanoylperoxy) hexane, 1,1,3,3-tetramethylbutylperoxy- 2-ethylhexanate, t-hexylperoxy-2-ethylhexanate, t-butylperoxy-3,5,5-trimethylhexanate, t-hexylperoxyisopropyl monocarbonate, t-butylperoxyisopropyl monocarbonate, t-butylperoxy-2-ethylhexyl monocarbonate, 2,5-dimethyl-2,5-di(benzoylperoxy) hexane, t-butylperoxyacetate, t-hexylperoxybenzoate, t-butyl peroxybenzoate, 2,5-dimethyl-2,5-di(t-butylperoxy) hexane. Among these, diisopropylbenzene hydroperoxide, cumene hydroperoxide, paramenthane hydroperoxide, benzoyl peroxide and the like are preferable.

Examples of the azo compound include, for example, azobisisoptyronitrile, 4,4'-azobis (4-cyanovaleric acid), 2,2'-azobis [2-(2-imidazolin-2-yl) propane, 2,2'-azobis (propane-2-carboamidine), 2,2'-azobis [N-(2-carboxyethyl)-2-methylpropanamide], 2,2'-azobis {2-[1-(2-hydroxyethyl)-2-imidazoline-2-yl] propane}, 2,2'-azobis (1-imino-1-pyrrolidino-2-methylpropane) and 2,2'-azobis {2-methyl-N-[1,1-bis (hydroxymethyl)-2-hydroxyethyl] propanamide}, and the like.

These radical generators may be used alone or in combination of two or more, and the amount thereof with respect to 100 parts by weight of the monomer component is usually in the range of 0.0001 to 5 parts by weight, preferably 0.0005 to 1 part by weight, more preferably 0.001 to 0.5 part by weight.

Further, the reducing agent can be used without limitation as long as it is used in a redox catalyst for emulsion polymerization, but in the present invention, it is particularly preferable to use at least two reducing agents in combination. As the at least two reducing agents, for example, a combination of a metal ion compound in a reduced state and another reducing agent is preferable.

The metal ion compound in the reduced state is not particularly limited, and examples thereof include ferrous sulfate, sodium hexamethylenediamine iron tetraacetate, cuprous naphthenate, and the like, and among these, ferrous sulfate is preferable.

These metal ion compounds in a reduced state can be used alone or in combination of two or more, and the amount of the metal ion compounds used with respect to 100 parts by weight of the monomer component is usually in the range of 0.000001 to 0.01 parts by weight, preferably 0.00001 to 0.001 parts by weight, more preferably 0.00005 to 0.0005 parts by weight.

The reducing agent other than the metal ion compound in the reduced state is not particularly limited, but examples thereof include: ascorbic acids such as ascorbic acid, sodium ascorbate, potassium ascorbate or a salt thereof; erythorbic acids such as erythorbic acid, sodium erythorbate, potassium erythorbate or a salt thereof; sulfinic acid salts such as sodium hydroxymethanesulfinate; sulfites such as sodium sulfite, potassium sulfite, sodium bisulfite, aldehyde sodium bisulfite, potassium bisulfite; pyrosulfites such as sodium pyrosulfite, potassium pyrosulfite, sodium hydrogensulfite, potassium hydrogensulfite and the like; thiosulfates such as sodium thiosulfate and potassium thiosulfate; phosphorous acid such as phosphorous acid, sodium phosphite, potassium phosphite, sodium hydrogen phosphite and potassium hydrogen phosphite, or salts thereof; pyrophosphite such as pyrophosphite, sodium pyrophosphite, potassium pyrophosphite, sodium hydrogen pyrophosphite, potassium hydrogen pyrophosphite, or a salt thereof; sodium formaldehyde sulfoxylate, and the like. Among these, ascorbic acid or a salt thereof, sodium formaldehyde sulfoxylate and the like are preferable, and ascorbic acid or a salt thereof is particularly preferable.

These reducing agents other than the metal ion compound in the reduced state can be also used alone or in combination of two or more, and the amount used with respect to 100 parts by weight of the monomer component is usually in the range of 0.001 to 1 part by weight, preferably 0.005 to 0.5 part by weight, more preferably 0.01 to 0.3 part by weight.

A preferable combination of the metal ion compound in the reduced state and the other reducing agent is a combination of ferrous sulfate and ascorbic acid or a salt thereof and / or sodium formaldehyde sulfoxylate. A combination of ferrous sulfate with ascorbate and / or sodium formaldehyde sulfoxylate is more preferable. The most preferable is a combination of ferrous sulfate and ascorbate. The amount of ferrous sulfate used with respect to 100 parts by weight of the monomer component at this time is usually in the range of 0.000001 to 0.01 parts by weight, preferably 0.00001 to 0.001 parts by weight, more preferably 0.00005 to 0.0005 parts by weight, and the amount of ascorbic acid or a salt thereof and / or sodium formaldehyde sulfoxylate used with respect to 100 parts by weight of the monomer component is usually in the range of 0.001 to 1 part by weight, preferably 0.005 to 0.5 part by weight, more preferably 0.01 to 0.3 part by weight.

The amount of water used in the emulsion polymerization reaction may be only that used for preparing the emulsion of the monomer component, but it is, with respect to 100 parts by weight of the monomer component used for polymerization, usually in the range of 10 to 1,000 parts by weight, preferably 50 to 500 parts by weight, more preferably 80 to 400 parts by weight, most preferably 100 to 300 parts by weight.

The emulsion polymerization reaction method may be a conventional method, and may be any one of a batch method, a semi-batch method, or a continuous method. The polymerization temperature and the polymerization time are not particularly limited and can be appropriately selected depending on the type of the polymerization initiator used and the like. The polymerization temperature is usually 0 to 100°C, preferably 5 to 80°C, more preferably 10 to 50°C, and the polymerization time is usually 0.5 to 100 hours, preferably 1 to 10 hours.

The polymerization conversion rate of the emulsion polymerization reaction is not particularly limited, but it is usually 80% by weight or more, preferably 90% by weight or more, more preferably 95% by weight or more, and the acrylic rubber bale produced at this condition is preferable since it is excellent in strength properties and free of monomer odor. A polymerization terminator may be used for termination of the polymerization.

(Coagulation Process)

The coagulation process of above (2) in the method for producing an acrylic rubber bale of the present invention is characterized in that the emulsion polymerization liquid obtained in the emulsion polymerization process of above (1) is brought into contact with a coagulant liquid consisting of an aqueous solution of a coagulant to produce hydrous crumbs.

The solid content concentration of the emulsion polymerization liquid used in the coagulation process is not particularly limited, but it is usually adjusted in the range of 5 to 50% by weight, preferably 10 to 45% by weight, more preferably 20 to 40% by weight.

The coagulant used in the coagulation process is not particularly limited, but a metal salt is usually used. Examples of the metal salt include, for example, an alkali metal salt, a periodic table group 2 metal salt, other metal salts and the like, preferably the alkali metal salt, the periodic table group 2 metal salt, more preferably the alkali metal salt.

Examples of the alkali metal include: a sodium salt such as sodium chloride, sodium nitrate, sodium sulfate; a kalium salt such as kalium chloride, kalium nitrate, kalium sulfate; a lithium salt such as lithium chloride, lithium nitrate, lithium sulfate; and the like. Among these, the sodium salt such as sodium chloride, sodium sulfate and the like is preferable, and the sodium sulfate is particularly preferable.

Examples of the periodic table group 2 metal salt include, for example, magnesium chloride, calcium chloride, magnesium nitrate, calcium nitrate, magnesium sulfate, calcium sulfate, and the like, preferably calcium chloride, magnesium sulfate.

Examples of the other metal salt to be use as a coagulant include, for example, Zinc chloride, titanium chloride, manganese chloride, iron chloride, cobalt chloride, nickel chloride, aluminum chloride, tin chloride, zinc nitrate, titanium nitrate, manganese nitrate, iron nitrate, cobalt nitrate, nickel nitrate, aluminum nitrate, tin nitrate, zinc sulfate, Titanium sulfate, manganese sulfate, iron sulfate, cobalt sulfate, nickel sulfate, aluminum sulfate, tin sulfate, and the like.

These coagulants can be used alone or in combination of two or more, and the amount thereof with respect to 100 parts by weight of the monomer component is usually in the range of 0.01 to 100 parts by weight, preferably 0.1 to 50 parts by weight, more preferably 1 to 30 parts by weight. When the amount of the coagulant in the coagulant liquid is within this range, the compression set resistance and the water resistance when the acrylic rubber bale is cross-linked can be highly improved, while the acrylic rubber is sufficiently coagulated, which is preferable.

When the concentration of the coagulant of the coagulant liquid (aqueous solution of the coagulant) to be used is usually in the range of 0.1 to 20% by weight, preferably 0.5 to 15% by weight, more preferably 1 to 10% by weight, particularly preferably 1.5 to 5% by weight, it is preferable, since the particle size of the hydrous crumbs generated can be uniformly collected in a specific region.

The temperature of the coagulant liquid is not limited, but when it is usually within a range of 40°C or higher, preferably 40 to 90°C, and more preferably 50 to 80°C, it is preferable, since uniform hydrous crumbs are generated.

The method of contacting the emulsion polymerization liquid and the coagulant liquid is not limited, but the method may be either one of a method of adding the emulsion polymerization liquid to the coagulant liquid being stirred, or a method of adding the coagulant liquid to the emulsion polymerization liquid being stirred. However, in the method of the present invention, the method of adding the emulsion polymerization liquid to the coagulant liquid being stirred is preferable, since the shape and crumb diameter of the generated hydrous crumbs can be uniform and focused, and the washing efficiency of emulsifier and coagulant can be significantly improved.

The rotation speed (stirring speed) of the coagulant liquid being stirred is expressed by the rotation speed of the stirring blade of the stirring device provided in the coagulation tank, but it is appropriate to be usually in the range of 100 rpm or more, preferably 200 to 1,000 rpm, more preferably 300 to 900 rpm, particularly preferably 400 to 800 rpm.

It is preferable that the rotation speed of the coagulant liquid is maintained at such violently rotation speed, as the coagulant liquid is stirred violently to such an extent that the particle size of the hydrous crumbs to be generated can be made small and uniform. Generation of crumbs having excessively large and small particles can be suppressed by setting the rotation speed to the above-mentioned lower limit or higher, and the coagulation reaction can be more easily controlled by controlling the amount to be equal to or less than the above-mentioned upper limit.

The peripheral speed of the coagulant liquid being stirred is expressed by the line speed of the outer circumference of the stirring blade of the stirrer provided in the coagulation tank, but it is preferable to stir vigorously to a certain extent, since the particle size of the hydrous crumbs to be generated can be made smaller and uniform. The peripheral speed is usually 0.5 m/s or more, preferably 1 m/s or more, more preferably 1.5 m/s or more, particularly preferably 2 m/s or more, most preferably 2.5 m/s or more. On the other hand, although the upper limit of the peripheral speed is not limited, when the peripheral speed is usually 50 m/s or lower, preferably 30 m/s or lower, more preferably 25 m/s or lower, and most preferably 20 m/s or lower, it is preferable, since the coagulation reaction can be easily controlled.

By controlling the above conditions of the coagulation reaction in the coagulation process (contact method, solid content concentration of emulsion polymerization liquid, concentration and temperature of the coagulant liquid, rotation speed and peripheral speed during stirring of the coagulant liquid) to a specific range, the shape and crumb diameter of the hydrous crumbs to be generated are uniform and focused, and the removal of emulsifiers and coagulants during later washing and dehydration are significantly improved, which is preferable.

The hydrous crumbs thus generated, when they are sieved with a JIS classification sieve, satisfy all of the following conditions (a) to (e), and are preferable. Here, note that the JIS sieve is in compliance with Japanese Industrial Standards (JIS-Z-8801-1).

    (a) The ratio of the hydrous crumbs that do not pass through a JIS sieve having a mesh opening of 9.5 mm is 10% by weight or less,
    (b) The ratio of the hydrous crumbs that pass through the JIS sieve having a mesh opening of 9.5 mm but do not pass through a JIS sieve having a mesh opening of 6.7 mm is 30% by weight or less,
    (c) The ratio of the hydrous crumbs that pass through the JIS sieve having a mesh opening of 6.7 mm but do not pass through a JIS sieve having a mesh opening of 710 $\mu$m is 20% by weight or more,
    (d) The ratio of the hydrous crumbs that pass through the JIS sieve having a mesh opening of 710 $\mu$m but do not pass through a JIS sieve having a mesh opening of 425 $\mu$m is 30% by weight or less, and
    (e) The ratio of the hydrous crumbs that pass through the JIS sieve having a mesh opening of 425 $\mu$m is 10% by weight or less.

When all of the hydrous crumbs generated were sieved, in the case that (a) the ratio of the comparatively large sized hydrous crumbs in the generated hydrous crumbs that do not pass through the JIS sieve having a mesh opening of 9.5 mm is 10% by weight or less, preferably 5% by weight or less, more preferably 1% by weight or less, with respect to the generated hydrous crumbs, (b) the ratio of the hydrous crumbs in the generated hydrous crumbs that pass through the JIS sieve having a mesh opening of 9.5 mm but do not pass through the JIS sieve having a mesh opening of 6.7 mm is 30% by weight or less, preferably 20% by weight or less, and more preferably 5% by weight or less, with respect to the generated hydrous crumbs, (c) the ratio of the hydrous crumbs in the generated hydrous crumbs that pass through the JIS sieve having a mesh opening of 6.7 mm but do not pass through the JIS sieve having a mesh opening of 710 $\mu$m is 20% by weight or more, preferably 40% by weight or more, more preferably 70% by weight or more, most preferably 80% by weight or more, with respect to the generated hydrous crumbs, (d) the ratio of the hydrous crumbs in the generated hydrous crumbs that pass through the JIS sieve having a mesh opening of 710 $\mu$m but do not pass through the JIS sieve having a mesh opening of 425 $\mu$m is 30% by weight or less, preferably 20% by weight or less, more preferably 15% by weight or less, with respect to the generated hydrous crumbs, and (e) the ratio of the relatively fine hydrous crumbs in the produced hydrous crumbs that pass through the JIS sieve having a mesh opening of 425 $\mu$m is 10% by weight or less, preferably 5% by weight or less, more preferably 1% by weight or less, with respect to the generated hydrous crumbs, it is preferable, since the washing efficiency of the emulsifier and the coagulant is remarkably improved and the productivity is high.

Further, in the present invention, when the ratio of (f) the hydrous crumbs that pass through the JIS sieve having a mesh opening of 6.7 mm but do not pass through the JIS sieve having a mesh opening of 4.75 mm is usually 40% by weight or less, preferably 10% by weight or less, more preferably 5% by weight or less, with respect to all of the generated hydrous crumbs, it is preferable, since the washing efficiency of the emulsifier and the coagulant is improved.

In the present invention, when the ratio of the (g) hydrous crumbs that pass through the JIS sieve having a mesh opening of 4.75 mm but do not pass through the JIS sieve having a mesh opening of 710 $\mu$m is usually 40% by weight or more, preferably 60% by weight or more, more preferably 80% by weight or more, with respect to all of the generated hydrous crumbs, it is preferable, since the removal efficiency of the emulsifier and the coagulant during washing and dehydration is remarkably improved.

In the present invention, the ratio of (h) hydrous crumbs that pass through the JIS sieve having a mesh opening of 3.35 mm but do not pass through the JIS sieve having a mesh opening of 710 $\mu$m is usually 20% by weight or more, preferably 40% by weight or more, more preferably 50% by weight or more, particularly preferably 60% by weight or more, most preferably 70% by weight or more, with respect to all of the generated hydrous crumbs, it is preferable, since the removal efficiency of the emulsifier and the coagulant during washing and dehydration is remarkably improved.

(Washing Process)

The washing process of the above (3) in the method for producing an acrylic rubber bale of the present invention is a process of washing the hydrous crumbs generated in the coagulation process of the above (2). The washing method is not limited and may be a conventional method. For example, the generated hydrous crumbs can be washed by mixing with a large amount of water.

The amount of water used for washing is not limited, but when the amount of water with respect to 100 parts by weight of the above monomer component per one washing is usually in the range of 50 parts by weight or more, preferably 50 to 15,000 parts by weight, more preferably 100 to 10,000 parts by weight, particularly preferably 150 to 5,000 parts by weight, it is preferable, since the ash content in the acrylic rubber bale can be effectively reduced during the washing.

The temperature of the water used in the washing process is not particularly limited, but when hot water is used as the washing water, the washing efficiency is improved, which is preferable. The temperature of the hot water is not limited, but when it is usually 40°C or higher, preferably 40 to 100°C, more preferably 50 to 90°C, most preferably 60 to 80°C, is preferable, since the washing efficiency can be remarkably increased. By setting the temperature of the washing water above the above-mentioned lower limit temperature, the emulsifier and coagulant are released from the hydrous crumbs, so that the washing efficiency is further improved.

The washing time is not limited, but it is appropriate to be usually in the range of 1 to 120 minutes, preferably 2 to 60 minutes, more preferably 3 to 30 minutes.

The number of washings with water is not particularly limited, and is usually 1 to 10 times, preferably a plurality of times, more preferably 2 to 3 times. From the viewpoint of reducing the residual amount of the coagulant in the finally obtained acrylic rubber bale, it is desirable that the number of times of washing with water is large, but as described above, the number of cleanings can be significantly reduced by specifying the shape of the hydrous crumbs and the hydrous crumb diameter and / or by setting the washing temperature in the above-mentioned range.

(Dehydration / Drying / Molding Process)

The dehydration / drying / molding process of the above (4) of the method for producing an acrylic rubber bale of the present invention is characterized in that, using a screw-type extruder provided with a dehydration barrel having a dehydration slit, a drying barrel under reduced pressure, and a die at a top thereof, the hydrous crumbs washed in the above (3) washing process are dehydrated up to a water content of 1 to 40% by weight in the dehydration barrel, and then the dehydrated hydrous crumbs are dried up to a water content of less than 1% by weight in the drying barrel, and a sheet-shaped dry rubber is extruded from the die.

In the present invention, as mentioned above, the hydrous crumbs to be supplied to the screw-type extruder is preferably separated from free water by a drainer after washing.

Draining Process

In the method for producing an acrylic rubber bale of the present invention, in order to improve the dehydration efficiency, it is preferable to provide a draining process to separate the free water from the hydrous crumbs after the above washing (water washing) process of above (3) and prior to the dehydration / drying process to be explained later.

As the drainer, known ones can be used without particular limitation, and examples thereof include a wire mesh, a screen, an electric sifter, and the like, and among these, the wire mesh and the screen are preferable. The mesh opening of the drainer is not limited, but when it is usually in the range of 0.01 to 5 mm, preferably 0.1 to 1 mm, more preferably 0.2 to 0.6 mm, it is preferable, since the loss of the hydrous crumbs is small and the draining can be done efficiently.

The water content of the hydrous crumbs after drainage, that is, the water content ratio of the hydrous crumbs supplied to the dehydration / drying process is not limited, but is usually in the range of 50 to 80% by weight, preferably 50 to 70% by weight, and more preferably 50 to 60% by weight.

The temperature of the hydrous crumbs after drainage, which is the temperature of the hydrous crumbs to be supplied to the dehydration / drying process is not particularly limited, but when it is usually in the range of 40°C or higher, preferably 40 to 100°C, more preferably 50 to 90°C, particularly preferably 55 to 85°C, most preferably 60 to 80°C, it is preferable, since the hydrous crumbs, having a high specific heat of 1.5 to 2.5 KJ/kg·K and are hard to raise the temperature like the acrylic rubber of the present invention, can be efficiently dehydrated and dried by using the screw-type extruder.

Dehydration of Hydrous Crumbs (Dehydration Barrel Section)

Dehydration of hydrous crumbs is performed in a dehydration barrel having a dehydration slit provided in a screw-type extruder. The mesh opening of the dehydration slit may be appropriately selected according to conditions of use, but when the mesh opening is usually in the range of 0.01 to 5 mm, preferably 0.1 to 1 mm, more preferably 0.2 to 0.6 mm, it is preferable, since the loss of the hydrous crumbs is small, and dehydration of the hydrous crumbs can be efficiently performed.

The number of dehydration barrels in the screw-type extruder is not limited, but when the number is usually plural, preferably 2 to 10, more preferably 3 to 6, it is preferable from the viewpoint of efficient dehydration of the sticky acrylic rubber.

There are two types of dehydration from the hydrous crumbs in the dehydration barrel: liquid removal from the dehydration slit (drainage) and steam removal (steam exhausting). In the present invention, the drainage is defined as dehydration, and the steam exhausting is defined as preliminary drying, so that they can be distinguished.

When using a screw-type extruder provided with a plurality of dehydration barrels, it is preferable to combine drainage and steam exhausting because it is possible to efficiently dehydrate the sticky acrylic rubber. In a screw-type extruder having three or more dehydration barrels, the selection of each barrel to be a drainage type dehydration barrel or a steam exhausting type dehydration barrel may be appropriately made according to the purpose of use, but in order to reduce the ash content in acrylic rubber bale that is usually produced, it is preferable to increase the number of drainage type barrels, while, in order to reduce the water content, it is preferable to increase the number of steam exhausting type barrels.

The set temperature of the dehydration barrel is appropriately selected depending on the monomer composition of acrylic rubber, the ash content, the water content of the crumbs, the operating conditions, and the like, but it is usually in the range of 60 to 150°C, preferably 70 to 140°C, more preferably 80 to 130°C. The set temperature of the drainage type dehydration barrel for dehydration in the drainage state is usually in the range of 60 to 120°C, preferably 70 to 110°C, more preferably 80 to 100°C. The set temperature of the steam exhausting type dehydration barrel for performing dehydration in the steam exhausting state is usually in the range of 100 to 150°C, preferably 105 to 140°C, more preferably 110 to 130°C.

The water content after dehydration by the drainage-type dehydration barrel to squeeze out water from the hydrous crumbs is not particularly limited, but when it is usually in the range of 1 to 40% by weight, preferably 5 to 40% by weight, more preferably 5 to 35% by weight, particularly preferably 10 to 35% by weight, most preferably 15 to 35% by weight, it is preferable, since the productivity and the efficiency of the ash removal are highly well-balanced.

When the dehydration is performed by a centrifuge or the like, dehydration of the sticky acrylic rubber having a reactive group can be hardly done because the acrylic rubber adheres to the dehydration slit portion, so that the water content is reduced here only to about 45 to 55% by weight. In contrast, in the present invention, it is preferable, for example, to use a screw-type extruder having a dehydrating slit and forcibly squeezed by a screw, since the water content can be efficiently reduced down to the aforementioned range.

When the drainage-type dehydration barrel and the steam-exhausting-type dehydration barrel are provided, the water content of the hydrous crumbs after dehydration in the drainage-type dehydration barrel section is usually 5 to 40% by weight, preferably 10 to 35% by weight, more preferably 15 to 35% by weight, and the water content of the hydrous crumbs after the preliminary drying in the steam-exhausting-type dehydration barrel section is usually 1 to 30% by weight, preferably 3 to 20% by weight, more preferably 5 to 15% by weight.

In the method for producing of the present invention, the water content of the crumbs after the dehydration process is 1 to 40% by weight as described above, but by setting the water content at this stage to the above lower limit or more, the dehydration time can be shortened and the deterioration of acrylic rubber can be suppressed, and by setting it to the above upper limit or less, the ash content can be sufficiently reduced.

Drying of the Hydrous Crumbs (Drying Barrel section)

Drying of the hydrous crumbs after the above dehydration is characterized in that the drying is performed in the drying barrel section under reduced pressure provided in the downstream side (closer to the die) of the dehydration barrel of the screw-type extruder. The degree of decompression in the drying barrel may be appropriately selected, but when it is usually 1 to 50 kPa, preferably 2 to 30 kPa, and more preferably 3 to 20 kPa, it is preferable, since the hydrous crumbs can be efficiently dried.

The set temperature of the drying barrel may be appropriately selected, but when the temperature is usually in the range of 100 to 250°C, preferably 110 to 200°C, more preferably 120 to 180°C, it is preferable, since there is no burning or deterioration of the acrylic rubber, so that the acrylic rubber is efficiently dried and the amount of gel insoluble in methyl ethyl ketone of the acrylic rubber can be reduced.

The number of drying barrels in the screw-type extruder is not limited, but it is usually plural, preferably 2 to 10, and more preferably 3 to 8. The degree of pressure reduction in the case of having a plurality of drying barrels may be a degree of pressure reduction similar in all the drying barrels, or it may vary by the drying barrel. The set temperature in the case of having multiple drying barrels may be similar to that of all the drying barrels or it may vary by the drying barrel, but when the temperature of the discharge portion (closer to the die) is set higher than the temperature of the introduction portion of the crumbs (closer to the dehydration barrel), it is preferable, since the drying efficiency can be increased.

The water content of the dried rubber after drying is usually less than 1% by weight, preferably 0.8% by weight or less, and more preferably 0.6% by weight or less. In the present invention, it is particularly preferable to melt and extrude the dry rubber with the water content set to this value (in a state where most of the water is removed) in the screw-type extruder, since the amount of gel insoluble in methyl ethyl ketone of the acrylic rubber bale can be reduced.

Acrylic Rubber Shape (Die Portion)

The acrylic rubber dehydrated / dried by the screw portions of the dehydration barrel and the drying barrel is sent to a screwless straightening die portion. A breaker plate or a wire net may or may not be provided between the screw portion and the die portion.

It is preferable that the dry rubber extruded from the die portion of the screw-type extruder is extruded in a sheet shape by making the die shape into a substantially rectangular shape, since a dry rubber with less entrapment of air and larger specific gravity of the extruded sheet and excellent storage stability can be obtained. The resin pressure in the die portion is not particularly limited, but when the resin pressure is usually in the range of 0.1 to 10 MPa, preferably 0.5 to 5 MPa, and more preferably 1 to 3 MPa, it is preferable, since air entrapment is small (specific gravity is high) and the productivity is excellent.

Screw-Type Extruder and Operating Conditions

The screw length (L) of the screw-type extruder used may be appropriately selected according to the purpose of use, but it is usually in the range of 3,000 to 15,000 mm, preferably 4,000 to 10,000 mm, more preferably 4,500 to 8,000 mm. The screw diameter (D) of the screw-type extruder used may also be appropriately selected according to the purpose of use, but it is usually in the range of 50 to 250 mm, preferably 100 to 200 mm, more preferably 120 to 160 mm.

The ratio (L / D) of the screw length (L) to the screw diameter (D) of the screw-type extruder is not limited, but when it is usually in the range of 10 to 100, preferably 20 to 80, more preferably 30 to 60, and particularly preferably 40 to 50, it is preferable, since the water content ratio can be less than 1% by weight without lowering the molecular weight of the dried rubber or causing burns.

Further, the rotation speed (N) of the screw-type extruder used may be appropriately selected according to various conditions, but when it is usually in the range of 10 to 1,000 rpm, preferably 50 to 750 rpm, more preferably 100 to 500 rpm, and most preferably 120 to 300 rpm, it is preferable, since the water content and the amount of gel insoluble in methyl ethyl ketone of the acrylic rubber can be efficiently reduced.

The above extrusion rate (Q) of the screw-type extruder used is not limited, but is usually in the range of 100 to 1,500 kg/hr, preferably 300 to 1,200 kg/hr, more preferably 400 to 1,000 kg/hr, most preferably 500 to 800 kg/hr. The above ratio (Q / N) of the extrusion rate (Q) and the number of revolutions (N) of the screw-type extruder are not limited, either, but when it is usually in the range of 2 to 10, preferably 3 to 8, and more preferably 4 to 6, it is preferable, since the quality including the strength properties of the acrylic rubber bale and the productivity of manufacturing are highly well-balanced.

Sheet-shaped Dry Rubber

The shape of the dry rubber extruded from the screw-type extruder in the method for production of the present invention is a sheet shape, which is preferable, since air is not entrapped so that the specific gravity can be made large, thereby highly improving the storage stability. Thus, the sheet-shaped dry rubber extruded from the screw-type extruder is usually cooled and cut to be used as an acrylic rubber sheet.

The thickness of the sheet-shaped dry rubber extruded from the screw-type extruder is not particularly limited, but when it is usually in the range of 1 to 40 mm, preferably 2 to 35 mm, more preferably 3 to 30 mm, and most preferably 5 to 25 mm, it is preferable, since it has excellent workability and productivity. In particular, since the thermal conductivity of the sheet-shaped dry rubber is as low as 0.15 to 0.35 W/mK, in order to increase cooling efficiency and to improve the productivity remarkably, the thickness of the sheet-shaped dry rubber is usually in the range of 1 to 30 mm, preferably 2 to 25 mm, more preferably 3 to 15 mm, and particularly preferably 4 to 12 mm.

The width of the dry rubber sheet extruded from the screw-type extruder is appropriately selected according to the purpose of use, but it is usually in the range of 300 to 1,200 mm, preferably 400 to 1,000 mm, more preferably 500 to 800 mm.

The temperature of the dry rubber extruded from the screw-type extruder is not limited, but is usually 100 to 200°C, preferably 110 to 180°C, more preferably 120 to 160°C.

Further, the water content of the dry rubber extruded from the screw-type extruder is usually less than 1% by weight, preferably 0.8% by weight or less, and more preferably 0.6% by weight or less.

The complex viscosity ($[\eta]$ 100°C) at 100°C of the sheet-shaped dry rubber extruded from the screw-type extruder is not limited, but when it is usually in the range of 1,500 to 6,000 Pa·s, preferably 2,000 to 5,000 Pa·s, more preferably 2,500 to 4,000 Pa·s, and most preferably 2,500 to 3,500 Pa·s, it is preferable, since the extrudability and shape retention as a sheet are highly well-balanced. This means that, by setting the value of the complex viscosity ($[\eta]$ 100°C) at the lower limit or higher, the extrudability can be more excellent, and when the value is lower than the upper limit or lower, collapse and breakage of the shape of the sheet-like dry rubber can be suppressed.

In the present invention, the sheet-shaped dry rubber extruded from the screw-type extruder is suitable for laminating and baling after cutting because the amount of air involved is small and the storage stability is excellent. The method for cutting the sheet-shaped dry rubber is not limited, but since the acrylic rubber of the acrylic rubber bale of the present invention has strong stickiness, it is preferable that the sheet-shaped dry rubber is cut after cooling the same in order to continuously cut without entrapping air.

The cutting temperature of the sheet-shaped dry rubber is not limited, but when the temperature is usually 60°C or lower, preferably 55°C or lower, more preferably 50°C or lower, it is preferable, since the cutting property and the productivity are highly well-balanced.

The complex viscosity ($[\eta]$ 60°C) at 60°C of the sheet-shaped dry rubber is not limited, but when it is usually 15,000 Pa·s or less, preferably 2,000 to 10,000 Pa·s, more preferably 2,500 to 7,000 Pa·s, and most preferably 2,700 to 5,500 Pa·s, it is preferable, since the cutting can be done continuously without entrapping air.

The ratio ($[\eta]$ 100°C / $[\eta]$ 60°C) of the complex viscosity ($[\eta]$ 100°C) at 100°C to the complex viscosity ($[\eta]$ 60°C) at 60°C of the sheet-shaped dry rubber is not limited, but when it is usually in the range of 0.5 or more, preferably 0.5 to 0.98, more preferably 0. 6 to 0.95, most preferably 0.75 to 0.93, it is preferable, since air entrapment is small, and cutting and productivity are highly well-balanced.

The method for cooling the sheet-shaped dry rubber is not limited and may be left at room temperature to be cooled. However, since the sheet-shaped dry rubber has a very low thermal conductivity of 0.15 to 0.35 W/mK, forced cooling such as an air-cooling method under ventilation or cooling, a water-spraying method for spraying water, or a dipping method for immersing in water is preferable for improving productivity, and the air cooling method under ventilation or cooling is particularly preferable.

By the air-cooling method for dry rubber sheets, for example, the sheet-shaped dry rubber can be extruded from a screw-type extruder onto a conveyor such as a belt conveyor and conveyed while being cooled by blowing cold air, so that the sheet-shaped dry rubber can be cooled. The temperature of the cold air is not limited, but is usually in the range of 0 to 25°C, preferably 5 to 25°C, more preferably 10 to 20°C. The length to be cooled is not particularly limited, but it is usually 5 to 500 m, preferably 10 to 200 m, more preferably 20 to 100 m. Although the cooling rate of the sheet-shaped dry rubber is not limited, when it is usually in the range of 50°C/hr or higher, more preferably 100°C/hr or higher, more preferably 150°C/hr or higher, it is preferable, since it is particularly easy to cut.

The cutting length of the sheet-shaped dry rubber is not limited and may be appropriately selected according to the size of the acrylic rubber bale to be produced, but it is usually in the range of 100 to 800 mm, preferably 200 to 500 mm, more preferably 250 to 450 mm.

(Baling Process)

The baling process of above (5) of the method for producing an acrylic rubber bale of the present invention is a process of baling by laminating the sheet-shaped rubber sheet to be integrated.

The lamination temperature of the sheet-shaped dry rubber is not limited, but when it is usually 30°C or higher, preferably 35°C or higher, and more preferably 40°C or higher, it is preferable, since air entrapped during lamination can be successfully released. The number of laminated layers may be appropriately selected according to the size or weight of the acrylic rubber bale.

The acrylic rubber bale of the present invention thus obtained is excellent in operability and storage stability as compared with crumb-shaped acrylic rubber, and the acrylic rubber bale can be by putting into a mixer such as a Banbury mixer or a roll as it is or after being cut into a required amount.

<Rubber Mixture>

The rubber mixture of the present invention is characterized by that it is produced by mixing the acrylic rubber bale with a filler and a cross-linking agent.

The filler to be used for the rubber mixture is not limited, but examples thereof include a reinforcing filler and a non-reinforcing filler, and the reinforcing filler is preferable.

Examples of the reinforcing filler include: carbon black such as furnace black, acetylene black, thermal black, channel black and graphite; silica such as wet silica, dry silica and colloidal silica; and the like. Further, the examples of non-reinforcing fillers include quartz powder, diatomaceous earth, zinc white, basic magnesium carbonate, activated calcium carbonate, magnesium silicate, aluminum silicate, titanium dioxide, talc, aluminum sulfate, calcium sulfate, barium sulfate, and the like.

These fillers can be used alone or in combination of two or more, and the compounding amount thereof is not particularly limited, but it is usually in the range of 1 to 200 parts by weight, preferably 10 to 150 parts by weight, more preferably 20 to 100 parts by weight, with respect to 100 parts by weight of the acrylic rubber bale.

The cross-linking agent to be used for the rubber mixturemay be appropriately selected depending on the type and application of the reactive group contained in the acrylic rubber constituting the acrylic rubber bale, and it is not particularly limited as long as it can cross-link the acrylic rubber bale. Conventionally known cross-linking agents such as, for example, polyvalent amine compounds such as diamine compounds and carbonates thereof; sulfur compounds; sulfur donors; triazine thiol compounds; polyvalent epoxy compounds; organic carboxylic acid ammonium salts; organic peroxides; polyvalent carboxylic acids; a quaternary onium salt; an imidazole compound; an isocyanuric acid compound; an organic peroxide; a triazine compound; and the like can be used. Among these, polyvalent amine compounds, carboxylic acid ammonium salts, dithiocarbamic acid metal salts and triazine thiol compounds are preferable, and hexamethylenediamine carbamate, 2,2'-bis [4-(4-aminophenoxy) phenyl] propane, benzoin ammonium acid and 2,4,6-trimercapto-1,3,5-triazine are particularly preferable.

When the acrylic rubber bale to be used includes a carboxyl group-containing acrylic rubber, it is preferable to use a polyvalent amine compound and its carbonate as a cross-linking agent. Examples of the polyvalent amine compound include: aliphatic polyvalent amine compounds such as hexamethylenediamine, hexamethylenediamine carbamate and N,N'-dicinnamylidene-1,6-hexanediamine; aromatic polyvalent amine compound such as 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene) dianiline, 4,4'-(p-phenylenediisopropylidene) dianiline, 2,2'-bis [4-(4-aminophenoxy) phenyl] propane, 4,4'-diaminobenzanilide, 4,4'-bis (4-aminophenoxy) biphenyl, m-xylylenediamine, p-xylylenediamine, 1,3,5-benzenetriamine, and the like; and the like. Among these, hexamethylenediamine carbamate, 2,2'-bis [4-(4-aminophenoxy) phenyl] propane, and the like are preferable.

When the acrylic rubber bale to be used is constituted by an epoxy group-containing acrylic rubber, examples of the cross-linking agent include: an aliphatic polyvalent amine compound such as hexamethylenediamine or hexamethylenediamine carbamate, and a carbonate thereof; aromatic polyvalent amine compound such as 4,4'-methylenedianiline; carboxylic acid ammonium salts such as ammonium benzoate and ammonium adipate; metal salts of dithiocarbamic acid such as zinc dimethyldithiocarbamate; polycarboxylic acids such as tetradecanedioic acid; quaternary onium salts such as cetyltrimethylammonium bromide; an imidazole compound such as 2-methylimidazole; isocyanuric acid compounds such as ammonium isocyanurate; and the like. Among these, carboxylic acid ammonium salts and metal salts of dithiocarbamic acid are preferable, and ammonium benzoate is more preferable.

When the acrylic rubber bale to be used is constituted by a halogen atom-containing acrylic rubber, it is preferable to use sulfur, a sulfur donor, or a triazine thiol compound as the cross-linking agent. Examples of the sulfur donor include dipentamethylene thiuram hexasulfide, triethyl thiuram disulfide and the like. Examples of the triazine compound include 6-trimercapto-s-triazine, 2-anilino-4,6-dithiol-s-triazine, 1-dibutylamino-3,5-dimercaptotriazine, 2-dibutylamino-4,6-dithiol-s-triazine, 1-phenylamino-3,5-dimercaptotriazine, 2,4,6-trimercapto-1,3,5-triazine, 1-hexylamino-3,5-dimercaptotriazine, and the like. Among these, 2,4,6-trimercapto-1,3,5-triazine is preferable.

These cross-linking agents may be used alone or in combination of two or more, and the compounding amount thereof with respect to 100 parts by weight of acrylic rubber bale is usually in the range of 0.001 to 20 parts by weight, preferably 0.1 to 10 parts by weight, more preferably 0.1 to 5 parts by weight. By setting the amount of the cross-linking agent to be in this range, it is possible to make the rubber elasticity sufficient while making the mechanical strength as the rubber cross-linked product excellent, which is preferable.

The rubber mixture of the present invention may contain other rubber components, as needed, in addition to the above acrylic rubber bale, as a rubber component.

The other rubber component used as necessary is not particularly limited, and examples thereof include natural rubber, polybutadiene rubber, polyisoprene rubber, styrene-butadiene rubber, acrylonitrile-butadiene rubber, silicone rubber, fluororubber, and olefin-based rubber. Examples thereof include elastomers, styrene elastomers, vinyl chloride elastomers, polyester elastomers, polyamide elastomers, polyurethane elastomers and polysiloxane elastomers. The shape of the other rubber component is not limited, and may be, for example, a granular shape, a crumb shape, a sheet shape, or a bale shape.

These other rubber components may be used alone or in combination of two or more. The amount of these other rubber components to be used is appropriately selected within a range that does not degrade the effects of the present invention.

The rubber mixture of the present invention may contain an anti-aging agent, if necessary. The anti-aging agent is not particularly limited, but examples thereof include: phenolic anti-aging agents such as 2,6-di-t-butyl-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl) propionate, styrenated phenol, 2,2'-methylene-bis (6-$\alpha$-methyl-benzyl-p-cresol), 4,4'-methylenebis (2,6-di-t-butylphenol), 2,2'-methylene-bis (4-methyl-6-t-butylphenol), 2,4-bis [(octylthio) methyl]-6-methylphenol, 2,2'-thiobis-(4-methyl-6-t-butylphenol), 4,4'-thiobis-(6-t-butyl-o-cresol), 2,6-di-t-butyl-4-(4,6-bis (octylthio)-1,3,5-triazin-2-ylamino) phenol; phosphite type anti-aging agents such as tris (nonylphenyl) phosphite, diphenylisodecylphosphite, tetraphenyldipropyleneglycol diphosphite; sulfur ester-based anti-aging agents such as dilauryl thiodipropionate; amine-based anti-aging agents such as phenyl-$\alpha$-naphthylamine, phenyl-$\beta$-naphthylamine, p-(p-toluenesulfonylamide) -diphenylamine, 4,4'-($\alpha$,$\alpha$-dimethylbenzyl) diphenylamine, N,N-diphenyl-p-phenylenediamine, N-isopropyl-N'-phenyl-p-phenylenediamine and butyraldehyde-aniline condensates; imidazole anti-aging agents such as 2-mercaptobenzimidazole; quinoline anti-aging agents such as 6-ethoxy-2,2,4-trimethyl-1,2-dihydroquinoline; hydroquinone anti-aging agents such as 2,5-di-(t-amyl) hydroquinone; and the like. Among these, amine-based anti-aging agents are particularly preferable.

These anti-aging agents can be used alone or in combination of two or more, and the compounding amount thereof with respect to 100 parts by weight of the acrylic rubber bale is in the range of 0.01 to 15 parts by weight, preferably 0.1 to 10 parts by weight, more preferably 1 to 5 parts by weight.

The rubber mixture of the present invention contains the above-mentioned acrylic rubber bale of the present invention, a filler, a cross-linking agent, and, if necessary, the other rubber component and the anti-aging agent, and may further optionally contain other additives, if necessary, commonly used in the art, for example, a cross-linking aid, a cross-linking accelerator, a cross-linking retarder, a silane coupling agent, a plasticizer, a processing aid, lubricants, pigments, colorants, antistatic agents, foaming agents and the like. These other compounding agents may be used alone or in combination of two or more, and the compounding amount of each of them is appropriately selected within a range that does not degrade the effects of the present invention.

<Method for Producing Rubber Mixture>

Examples of the method for producing the rubber mixture of the present invention include a method of mixing the acrylic rubber bale of the present invention with a filler, a cross-linking agent, and other compounding agent which can be optionally contained, if necessary. For mixing of each component, any means conventionally used in the field of rubber processing, such as an open roll, a Banbury mixer, various kneaders, and the like can be used. This means that the acrylic rubber bale, the filler, the cross-linking agent and the like can be directly mixed, preferably directly kneaded, by using these mixers.

In that case, the acrylic rubber bale of the present invention may be used in a bale shape as obtained or used after divided (cut, and the like).

The mixing procedure of each component is not limited, but for example, a two-stage mixing is preferable, in which components that are difficult to react or decompose with heat are sufficiently mixed, and then thereafter, a cross-linking agent, which is a component that easily reacts or decomposes with heat, and the like are mixed for a short at a temperature that reaction and decomposition does not occur. To be specific, it is preferable to mix the acrylic rubber bale and the filler in the first stage and then mix the cross-linking agent in the second stage. The other rubber components and the antiaging agent are usually mixed in the first stage, the cross-linking accelerator is mixed in the second stage, and the other compounding agents may be appropriately selected.

The Mooney viscosity (ML1+4,100°C; compound Mooney) of the rubber mixture of the present invention thus obtained is not limited, but is usually in the range of 10 to 150, preferably 20 to 100, more preferably 25 to 80.

<Rubber Cross-linked Product>

The rubber cross-linked product of the present invention is obtained by cross-linking the above rubber mixture. The rubber cross-linked product of the present invention can be produced by molding the rubber mixture of the present invention by a molding machine applicable for a desired shape, for example, an extruder, an injection molding machine, a compressor or a roll, occurring a cross-linking reaction by heating, and fixing the shape as a rubber cross-linked product.

In this case, the molding may be performed in advance and then cross-linked, or the molding and the cross-linking may be performed simultaneously. The molding temperature is usually 10 to 200°C, preferably 25 to 150°C. The cross-linking temperature is usually 100 to 250°C, preferably 130 to 220°C, more preferably 150 to 200°C. The cross-linking time is usually 0.1 minutes to 10 hours, preferably 1 minute to 5 hours. As a heating method, a known method has been used for cross-linking rubber such as press heating, steam heating, oven heating, and hot air heating may be appropriately selected.

The rubber cross-linked product of the present invention may be further heated for secondary cross-linking depending on the shape and size of the rubber cross-linked product. The secondary cross-linking varies depending on the heating method, the cross-linking temperature, the shape, and the like, but the secondary cross-linking is preferably performed for 1 to 48 hours. The heating method and heating temperature may be appropriately selected.

The rubber cross-linked product of the present invention has excellent water resistance while maintaining basic properties such as tensile strength, elongation and hardness as a rubber.

Taking advantage of the above-mentioned excellent properties, the rubber cross-linked product of the present invention is preferably used as: for example, sealing materials such as an O-ring, a packing, a diaphragm, an oil seal, a shaft seal, a bearing seal, a mechanical seal, a well head seal, an electric / electronic device seal, an air compression device; various kinds of gaskets such as a rocker cover gasket mounted on a connecting portion between a cylinder block and a cylinder head, an oil pan gasket mounted on a connecting portion between an oil pan and a cylinder head or a transmission case, a gasket for a fuel cell separator mounted between a pair of housings sandwiching a unit cell including a positive electrode, an electrolyte plate and a negative electrode, a gasket for hard disk drive top covers; cushioning materials, anti-vibration materials; electric wire coating materials; industrial belts; tubes and hoses; sheets; and the like.

The rubber cross-linked product of the present invention is also used as an extrusion-molded product and mold cross-linked product used for automobiles, for example, fuel oil system hoses for fuel tank such as a fuel hose, a filler neck hose, a vent hose, a vapor hose, an oil hose, and the like; air system hoses such as a turbo air hose, a mission control hose, and the like; various hoses such as a radiator hose, a heater hose, a brake hose, an air conditioner hose, and the like.

<Device Configuration used for producing an acrylic rubber bale>

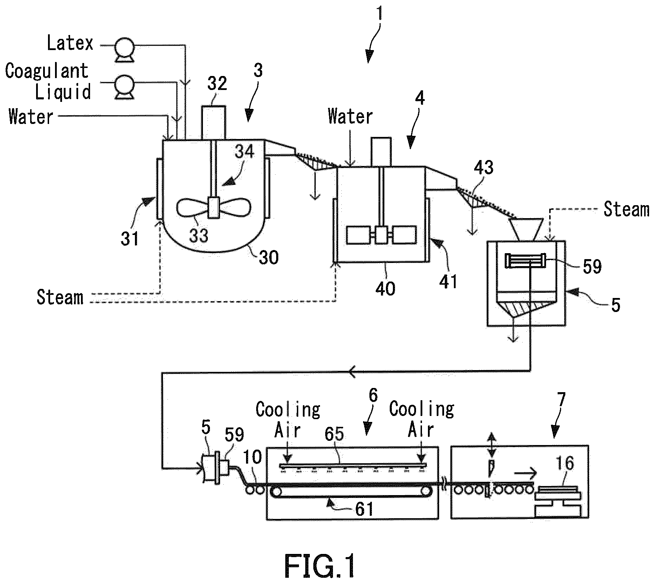

Next, a device configuration used for producing the acrylic rubber bale according to one embodiment of the present invention will be described. FIG. 1 is a diagram schematically showing an example of an acrylic rubber production system having a device configuration used for producing an acrylic rubber bale according to one embodiment of the present invention. For producing the acrylic rubber of the present invention, for example, the acrylic rubber production system 1 shown in FIG. 1 can be used.

The acrylic rubber production system shown in FIG. 1 is composed of an emulsion polymerization reactor (not shown), a coagulation device 3, a washing device 4, a drainer 43, a screw-type extruder 5, a cooling device 6, and a baling device 7.

The emulsion polymerization reactor is configured to perform the above-mentioned emulsion polymerization process. Although not shown in FIG. 1, this emulsion polymerization reactor has, for example, a polymerization reaction tank, a temperature control unit for controlling a reaction temperature, and a stirring device provided with a motor and a stirring blade. In the emulsion polymerization reactor, water and an emulsifier are mixed with a monomer component for forming an acrylic rubber, and the mixture is emulsified while being appropriately stirred by a stirrer, and emulsion polymerization is performed in the presence of a polymerization catalyst, thereby to obtain emulsion polymerization liquid, that is latex. The emulsion polymerization reactor may be a batch type, a semi-batch type or a continuous type, and may be a tank-type reactor or a tube-type reactor.

The coagulation device 3 shown in FIG. 1 is configured to perform the process related to the coagulation process described above. As schematically shown in FIG. 1, the coagulation device 3 includes, for example, a stirring tank 30, a heating unit 31 that heats the inside of the stirring tank 30, a temperature control unit (not shown) that controls the temperature inside the stirring tank 30, a stirring device 34 having a motor 32 and a stirring blade 33, and a drive control unit (not shown) that controls the rotation number and rotation speed of the stirring blade 33. In the coagulation device 3, hydrous crumbs can be produced by bringing the emulsion polymerization liquid prepared in the emulsion polymerization reactor into contact with a coagulant liquid as a coagulant to coagulate the emulsion polymerization liquid.

In the coagulation device 3, for example, the contact between the emulsion polymerization liquid and the coagulant liquid is performed by adding the emulsion polymerization liquid to the stirred coagulant liquid. This means that the stirring tank 30 of the coagulation device 3 is filled with the coagulant liquid, and the emulsion polymerization liquid is added to and brought into contact with the coagulant liquid to coagulate the emulsion polymerization liquid, thereby generating hydrous crumbs.

The heating unit 31 of the coagulation device 3 is configured to heat the coagulant liquid with which the stirring tank 30 is filled. Further, the temperature control unit of the coagulation device 3 is configured to control the temperature inside the stirring tank 30 by controlling the heating operation by the heating unit 31 while monitoring the temperature inside the stirring tank 30 measured by a thermometer. The temperature of the coagulant liquid in the stirring tank 30 is controlled by the temperature control unit to be usually in the range of 40°C or higher, preferably 40 to 90°C, more preferably 50 to 80°C.

The stirring device 34 of the coagulation device 3 is configured to stir the coagulant liquid filled in the stirring tank 30. Specifically, the stirring device 34 includes a motor 32 that generates rotational power, and a stirring blade 33 that extends in a direction perpendicular to the rotation axis of the motor 32. The stirring blades 33 can rotate the coagulant liquid, which is coagulant solution, filled in the stirring tank 30 about the rotation axis by the rotation power of the motor 32 to flow the coagulant liquid. The shape and size of the stirring blade 33, the number of installations, and the like are not particularly limited.

The drive control unit of the coagulation device 3 is configured to control the rotational drive of the motor 32 of the stirring device 34 and set the rotation speed of the stirring blades 33 of the stirring device 34 to predetermined values. The stirring speed of the stirring blade 33 is controlled by the drive controller so that the stirring speed of the coagulant liquid is controlled to be, for example, usually in the range of 100 rpm or more, preferably 200 to 1,000 rpm, more preferably 300 to 900 rpm, and particularly preferably 400 to 800 rpm. The rotation of the stirring blade 33 is controlled by the drive controller so that the peripheral speed of the coagulant liquid is usually 0.5 m/s or higher, preferably 1 m/s or higher, more preferably 1.5 m/s or higher, particularly preferably 2 m/s or higher, most preferably 2.5 m/s or higher. Further, the rotation of the stirring blade 33 is controlled by the drive control unit so that the upper limit of the peripheral speed of the coagulant liquid is usually 50 m/s or lower, preferably 30 m/s or lower, more preferably 25 m/s or lower, and most preferably 20 m/s or lower.

The washing device 4 shown in FIG. 1 is configured to perform the above-described washing process. As schematically shown in FIG. 1, the washing device 4 includes, for example, a washing tank 40, a heating unit 41 that heats the inside of the washing tank 40, and a temperature control unit (not shown) that controls the temperature inside the washing tank 40. In the washing device 4, by mixing the hydrous crumbs produced in the coagulation device 3 with a large amount of water for washing, the ash content in the finally obtained acrylic rubber bale can be effectively reduced.

The heating unit 41 of the washing device 4 is configured to heat the inside of the washing tank 40. In addition, the temperature control unit of the washing device 4 controls the temperature inside the washing tank 40 by controlling the heating operation by the heating unit 41 while monitoring the temperature inside the washing tank 40 measured by the thermometer. As described above, the temperature of the washing water in the washing tank 40 is controlled to be usually in the range of 40°C or higher, preferably 40 to 100°C, more preferably 50 to 90°C, and most preferably 60 to 80°C.

The hydrous crumbs washed in the washing device 4 are supplied to the screw-type extruder 5 which performs a dehydration process and a drying process. At this time, it is preferable that the hydrous crumbs after washing are supplied to the screw-type extruder 5 through a drainer 43 capable of separating free water. For the drainer 43, for example, a wire mesh, a screen, an electric sifter, or the like can be used.

Further, when the hydrous crumb after washing is supplied to the screw-type extruder 5, the temperature of the hydrous crumb is preferably 40°C or higher, more preferably 60°C or higher. By setting the temperature of water used for washing in the washing device 4, for example, to 60°C or higher (for example, 70°C), so that the temperature of the hydrous crumb when supplied to the screw-type extruder 5 is maintained at 60°C or higher. Otherwise, the hydrous crumb may be heated to a temperature of 40°C or higher, preferably 60°C or higher when being conveyed from the washing device 4 to the screw-type extruder 5. This makes it possible to effectively perform the dehydration process and the drying process, which are the subsequent processes, and to significantly reduce the water content of the finally obtained dried rubber.

The screw-type extruder 5 shown in FIG. 1 is configured to perform the processes related to the aforementioned dehydration process and the drying process. Although a screw-type extruder 5 is illustrated in FIG. 1 as a preferred example, a centrifuge, a squeezer, or the like may be used as a dehydrator that performs the process related to the dehydration process, and a hot air dryer, a reduced pressure dryer, an expander dryer, a kneader type dryer or the like may be used as a dryer that performs the process related to the drying process.

The screw-type extruder 5 is configured to mold the dried rubber obtained through the dehydration process and the drying process into a predetermined shape and to discharge the dried rubber. Specifically, the screw-type extruder 5 is provided with: a dehydration barrel section 53 having a function as a dehydrator to dehydrate the hydrous crumb washed by the washing device 4; a drying barrel section 54 having a function as a dryer for drying the hydrous crumb; and a die 59 having a molding function to mold a hydrous crumb on the downstream side of the screw-type extruder 5.

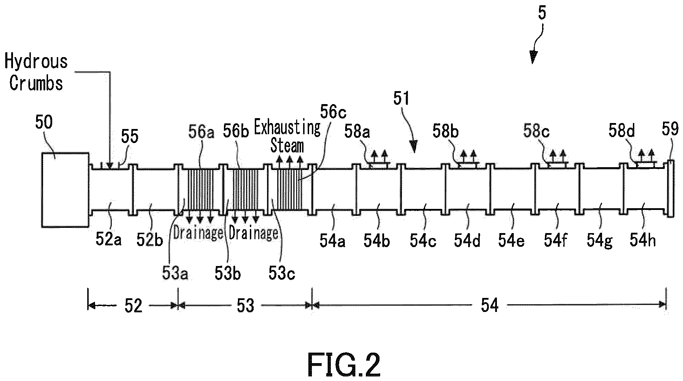

The configuration of the screw-type extruder 5 will be described below with reference to FIG. 2. FIG. 2 shows the configuration of a specific suitable example as the screw-type extruder 5 shown in FIG. 1. By the screw-type extruder 5, the above-described dehydration process and drying process can be suitably performed.

The screw-type extruder 5 shown in FIG. 2 is a twin-screw-type extruder / dryer including a pair of screws (not shown) in a barrel section 51. The screw-type extruder 5 has a drive unit 50 that rotationally drives a pair of screws in the barrel section 51. The drive unit 50 is attached to an upstream end (left end in FIG. 2) of the barrel section 51. Further, the screw-type extruder 5 has a die 59 at a downstream end (right end in FIG. 2) of the barrel section 51.

The barrel section 51 has a supply barrel section 52, a dehydration barrel section 53, and a drying barrel section 54 from the upstream side to the downstream side (from the left side to the right side in FIG. 2).

The supply barrel section 52 is composed of two supply barrels, which are a first supply barrel 52a and a second supply barrel 52b.

Further, the dehydration barrel section 53 is composed of three dehydration barrels, which are a first dehydration barrel 53a, a second dehydration barrel 53b and a third dehydration barrel 53c.

The drying barrel section 54 includes eight drying barrels, which are a first drying barrel 54a, a second drying barrel 54b, a third drying barrel 54c, a fourth drying barrel 54d, a fifth drying barrel 54e, a sixth drying barrel 54f, a seventh drying barrel 54g, and an eighth drying barrel 54h.

Thus, the barrel section 51 is configured by connecting the 13 divided barrels 52a to 52b, 53a to 53c, and 54a to 54h from the upstream side to the downstream side.

Further, the screw-type extruder 5 has a heating means (not shown) to individually heat each of the barrels 52a to 52b, 53a to 53c, and 54a to 54h. The hydrous crumbs in each of the barrels 52a to 52b, 53a to 53c, and 54a to 54h are heated to a predetermined temperature by the heating means. The heating means is provided with a number corresponding to each barrel 52a to 52b, 53a to 53c, 54a to 54h. As such a heating means, for example, a configuration in which high temperature steam is supplied from a steam supply means to a steam distribution jacket formed in each barrel 52a to 52b, 53a to 53c, 54a to 54h is adopted, but the configuration is not limited to this. Further, the screw-type extruder 5 has a temperature control means (not shown) to control the set temperature of each heating means corresponding to each barrel 52a to 52b, 53a to 53c, 54a to 54h.

It should be noted that the number of supply barrels, dehydration barrels, and drying barrels constituting the barrel sections 52, 53, and 54 of the barrel section 51 is not limited to the embodiment shown in FIG.2, but the number can be set in accordance with the water content of the hydrous crumbs of the acrylic rubber to be dried and the like.

For example, the number of supply barrels installed in the supply barrel section 52 is, for example, 1 to 3. Further, the number of dehydration barrels installed in the dehydration barrel section 53 is preferably, for example, 2 to 10, and more preferably 3 to 6, since the hydrous crumbs of the sticky acrylic rubber can be efficiently dehydrated. Further, the number of the drying barrels installed in the drying barrel section 54 is, for example, preferably 2 to 10, and more preferably 3 to 8.

The pair of screws in the barrel section 51 are rotationally driven by a driving means such as a motor stored in the driving unit 50. The pair of screws, extending from the upstream side to the downstream side in the barrel section 51, is rotationally driven so that the pair of screws can convey the hydrous crumbs to the downstream side while mixing the hydrous crumbs supplied to the supply barrel section 52. The pair of screws is preferably a biaxial meshing type in which peaks and troughs are meshed with each other, whereby the dehydration efficiency and drying efficiency of the hydrous crumbs can be increased.

Further, the rotation direction of the pair of screws may be the same direction or different directions, but from the viewpoint of self-cleaning performance, a type that rotates in the same direction is preferable. The screw shape of the pair of screws is not particularly limited and may be any shape required for each barrel section 52, 53, 54.

The supply barrel section 52 is an area for supplying the hydrous crumbs into the barrel section 51. The first supply barrel 52a of the supply barrel section 52 has a feed port 55 provided therewith for supplying the hydrous crumbs into the barrel section 51.

The dehydration barrel section 53 is an area for separating and discharging a liquid (serum water) containing a coagulant from hydrous crumbs.

The first to third dehydration barrels 53a to 53c, constituting the dehydration barrel section 53, have dehydration slits 56a, 56b and 56c for discharging the moisture of the hydrous crumbs to the outside, respectively. A plurality of dehydrating slits 56a, 56b, 56c are formed in each of the dehydration barrels 53a to 53c.

The slit width of each dehydration slit 56a, 56b, 56c, that is, the mesh opening may be appropriately selected according to the use conditions, and is usually 0.01 to 5 mm. From the viewpoint that the loss of the hydrous crumb is small and the dehydration of hydrous crumb can be efficiently performed, it is preferably 0.1 to 1 mm, and more preferably 0.2 to 0.6 mm.

There are two cases to remove water from the hydrous crumbs in the dehydration barrels 53a to 53c of the dehydration barrel section 53, which are a case to remove water in a liquid form from each of the dehydration slits 56a, 56b and 56c and to a case to remove water in a vapor state. In the dehydration barrel section 53 of the present embodiment, for distinction of the two cases, the case of removing water in a liquid state is defined as drainage, and the case of removing in a vapor state is defined as steam exhausting.

In the dehydration barrel section 53, it is preferable to use drainage and steam exhausting in combination, since it is possible to efficiently reduce the water content of the sticky acrylic rubber. In the dehydration barrel section 53, which of the first to third dehydration barrels 53a to 53c is to be used for drainage or discharging steam may be appropriately set according to the purpose of use, but it is preferable to increase the number of dehydration barrels for drainage in a case of reducing ash content in usually produced acrylic rubber. In that case, for example, as shown in FIG. 2, the first and second dehydration barrels 53a and 53b on the upstream side perform drainage, and the third dehydration barrel 53c on the downstream side performs steam exhausting. Further, it may be considered that, for example, when the dehydration barrel section 53 has four dehydration barrels, a mode in which, for example, three upstream dehydration barrels perform drainage and one downstream dehydration barrel performs steam exhausting. On the other hand, in the case of reducing the water content, it is advantageous to increase the number of dehydration barrels for steam exhausting.

The set temperature of the dehydration barrel section 53 is usually in the range of 60 to 150°C, preferably 70 to 140°C, and more preferably 80 to 130°C, as described in the dehydration / drying process above. The set temperature of the dehydration barrel for dehydration in a drained state is usually in the range of 60 to 120°C, preferably 70 to 110°C, more preferably 80 to 100°C, and the set temperature of the dehydration barrel for dehydration in the steam exhausting state is usually in the range of 100 to 150°C, preferably 105 to 140°C, more preferably 110 to 130°C.

The drying barrel section 54 is an area for drying the hydrous crumbs after dehydration under reduced pressure. Out of the first to eighth drying barrels 54a to 54h forming the drying barrel section 54, the second drying barrel 54b, the fourth drying barrel 54d, the sixth drying barrel 54f, and the eighth drying barrel 54h are provided with vent ports 58a, 58b, 58c, 58d for deaeration, respectively. A vent pipe (not shown) is connected to each of the vent ports 58a, 58b, 58c, 58d.

A vacuum pump (not shown) is connected to the end of each vent pipe, and the inside of the drying barrel 54 is depressurized to a predetermined pressure by the operation of these vacuum pumps. The screw-type extruder 5 has pressure control means (not shown) for controlling the operation of the vacuum pumps and controlling the degree of pressure reduction in the drying barrel section 54.

The degree of pressure reduction in the drying barrel section 54 may be appropriately selected, but as described above, it is usually set to 1 to 50 kPa, preferably 2 to 30 kPa, and more preferably 3 to 20 kPa.

The set temperature in the drying barrel section 54 may be appropriately selected, but as described above, it is usually set to 100 to 250°C, preferably 110 to 200°C, more preferably 120 to 180°C.

In each of the drying barrels 54a to 54h forming the drying barrel section 54, the temperature thereof may be set to an approximate value of all the drying barrels 54a to 54h or different values, but it is preferable to set the temperature of the downstream side (the side of the die 59) higher than the temperature of the upstream side (the side of the dehydration barrel section 53), since the drying efficiency is improved.

The die 59 is a mold arranged at the downstream end of the barrel section 51 and has a discharge port having a predetermined nozzle shape. The acrylic rubber dried in the drying barrel section 54 passes through the discharge port of the die 59 to be extruded into a shape corresponding to the predetermined nozzle shape. The acrylic rubber passing through the die 59 is formed into various shapes such as a granular shape, a columnar shape, a round bar shape, and a sheet shape depending on the nozzle shape of the die 59. For example, by forming the discharge port of the die 59 into a substantially rectangular shape, the acrylic rubber can be extruded into a sheet shape. A breaker plate or a wire net may or may not be provided between the screw and the die 59.

According to the screw-type extruder 5 of the present embodiment, the hydrous crumbs of the raw material acrylic rubber are extruded into a sheet-shaped dry rubber in a following way.

The hydrous crumbs of acrylic rubber obtained through the washing process is supplied to the supply barrel section 52 from the feed port 55. The hydrous crumbs supplied to the supply barrel section 52 is sent from the supply barrel section 52 to the dehydration barrel section 53 by rotation of a pair of screws in the barrel section 51. In the dehydration barrel section 53, as described above, the water contained in the hydrous crumbs is drained or the steam is discharged from the dehydration slits 56a, 56b, and 56c provided in the first to third dehydration barrels 53a to 53c, respectively, so that the hydrous crumbs are dehydrated.

The hydrous crumbs dehydrated in the dehydration barrel section 53 is sent to the drying barrel section 54 by rotation of a pair of screws in the barrel section 51. The hydrous crumbs sent to the drying barrel section 54 are plasticized and mixed to form a melt, which is conveyed to the downstream side while being heated. Then, the water contained in the melt of the acrylic rubber is vaporized, and the water (vapor) is discharged to the outside through vent pipes (not shown) connected to the vent ports 58a, 58b, 58c, 58d.

During passing through the drying barrel section 54 as described above, the hydrous crumbs are dried to become a melt of acrylic rubber, so that the acrylic rubber is supplied to the die 59 by the rotation of a pair of screws in the barrel section 51, to be formed into a sheet shape, is extruded from the die 59 as a sheet-shaped dried rubber.

Hereinafter, an example of operating conditions of the screw-type extruder 5 of the present embodiment will be described.

The rotation speed (N) of the pair of screws in the barrel section 51 may be appropriately selected according to various conditions, and is usually 10 to 1,000 rpm, and since the water content of the acrylic rubber and the gel amount can be efficiently reduced, the rotation speed (N) of the pair of screws in the barrel section 51 is preferably 50 to 750 rpm, more preferably 100 to 500 rpm, and most preferably 120 to 300 rpm.

The extrusion rate (Q) of the acrylic rubber is not particularly limited, but it is usually 100 to 1,500 kg/hr, preferably 300 to 1,200 kg/hr, more preferably 400 to 1,000 kg/hr, and most preferably 500 to 800 kg/hr.

The ratio (Q / N) of the extrusion amount (Q) of the acrylic rubber to the rotation speed (N) of the screw is not particularly limited, but it is usually 1 to 20, preferably 2 to 10, more preferably 3 to 8, particularly preferably 4 to 6.

The cooling device 6 shown in FIG. 1 is configured to cool the dried rubber obtained through the dehydration process using a dehydrator and the drying process using a dryer. As a cooling method by the cooling device 6, various methods including an air cooling method in which air is blown or under cooling, a water spraying method in which water is sprayed, a dipping method in which water is immersed, and the like can be adopted. Otherwise, the dried rubber may be cooled by leaving it at room temperature.

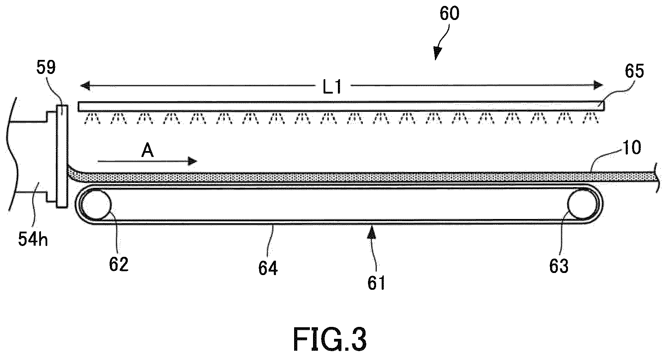

As described above, the dry rubber discharged from the screw-type extruder 5 is extruded into various shapes such as a granular shape, a columnar shape, a round bar shape and a sheet shape depending on the nozzle shape of the die 59. Hereinafter, as an example of the cooling device 6, a conveyor-type cooling device 60 that cools the sheet-shaped dried rubber 10 will be described with reference to FIG. 3.

FIG. 3 shows a configuration of a conveyor-type cooling device 60 suitable as the cooling device 6 shown in FIG. 1. The conveyer-type cooling device 60 shown in FIG. 3 is configured to cool the sheet-shaped dry rubber 10 discharged from the discharge port of the die 59 of the screw-type extruder 5 by an air cooling method while conveying the sheet-type dry rubber 10. By using this conveyor-type cooling device 60, the sheet-shaped dry rubber 10 discharged from the screw-type extruder 5 can be suitably cooled.

The conveyor-type cooling device 60 shown in FIG. 3 is used, for example, directly connected to the die 59 of the screw-type extruder 5 shown in FIG. 2 or installed close to the die 59.

The conveyor-type cooling device 60 is provided with a conveyor 61 that conveys the sheet-shaped dry rubber 10 discharged from the die 59 of the screw-type extruder 5 in the direction of arrow A in FIG. 3, and provided with a cooling means 65 for blowing cool air to the sheet-shaped dry rubber 10 on the conveyor 61.

The conveyor 61 has rollers 62 and 63, and a conveyor belt 64 that is wound around these rollers 62 and 63 and on which the sheet-shaped dry rubber 10 is placed. The conveyor 61 is configured to continuously convey the sheet-shaped dry rubber 10 discharged from the die 59 of the screw-type extruder 5 onto the conveyor belt 64 to the downstream side (right side in FIG. 3).

The cooling means 65 is not particularly limited, but examples thereof include a cooling means that has a structure capable of blowing cooling air sent from a cooling air generation means (not shown) onto the surface of the sheet-shaped dry rubber 10 on the conveyor belt 64.

The length L1 of the conveyor 61 and the cooling means 65 (the length of the portion to which the cooling air can be blown) of the transport cooling device 60 is not particularly limited, but is, for example, 10 to 100 m, preferably 20 to 50 m. Further, the conveyance speed of the sheet-shaped dry rubber 10 in the conveyor-type cooling device 60, which can be appropriately adjusted in accordance with the length L1 of the conveyor 61 and the cooling means 65, the discharge speed of the sheet-shaped dry rubber 10 discharged from the die 59 of the screw-type extruder 5, a target cooling speed, a target cooling time, and the like, is, for example, 10 to 100 m/hr, and more preferably 15 to 70 m/hr.

According to the conveyor-type cooling device 60 shown in FIG. 3, the sheet-shaped dry rubber 10 discharged from the die 59 of the screw-type extruder 5 is conveyed by the conveyor 61 while the sheet-shaped dry rubber 10 is cooled by the cooling means 65 by blowing the cooling air to the sheet-shaped dry rubber 10.

It should be noted that the conveyor-type cooling device 60 is not particularly limited to the configuration including one conveyor 61 and one cooling means 65 as shown in FIG. 3, but it may be configured to be provided with two or more conveyors 61 and two or more cooling means 65 corresponding thereto. In that case, the total length of each of the two or more conveyors 61 and the cooling means 65 may be set within the above range.

The bale forming device 7 shown in FIG. 1 is configured to process a dried rubber extruded from a screw-type extruder 5 and cooled by a cooling device 6 to produce a bale, which is shaped in a chunk of a block. As described above, the screw-type extruder 5 can extrude dry rubber into various shapes such as granular, columnar, round bar-like, and sheet-like shapes, and the baling device 7 is configured to bale the dry rubber formed in various shapes. The weight and shape of the acrylic rubber bale produced by the baling device 7 are not particularly limited, but, for example, a substantially rectangular parallelepiped acrylic rubber bale weighing about 20 kg is produced.

The baling device 7 may include, for example, a baler, and an acrylic rubber bale may be produced by compressing cooled dry rubber with the baler.

Further, when the sheet-shaped dry rubber 10 is produced by the screw-type extruder 5, an acrylic rubber bale made by laminating the sheet-shaped dry rubbers 10 may be produced. For example, a cutting mechanism for cutting the sheet-shaped dry rubber 10 may be provided in the baling device 7 provided on the downstream side of the conveyor-type cooling device 60 shown in FIG. 3. Specifically, for example, the cutting mechanism of the baling device 7 is configured to continuously cuts the cooled sheet-shaped dry rubber 10 at predetermined intervals and processes it into a cut sheet-shaped dry rubber 16 having a predetermined size. By laminating a plurality of cut sheet-shaped dry rubbers 16 cut into a predetermined size by the cutting mechanism, an acrylic rubber bale in which the cut sheet-shaped dry rubbers 16 are laminated can be produced.

When producing an acrylic rubber bale in which the cut sheet-shaped dry rubbers 16 are laminated, it is preferable to laminate the cut sheet dry rubbers 16 at 40°C or higher, for example. By laminating the cut sheet dry rubbers 16 at 40°C or higher, good air release is realized by further cooling and compression by its own weight.

[EXAMPLES]

The present invention will be described more specifically below with reference to Examples, Comparative Examples and Reference Examples. In addition, "part", "%" and "ratio" in each example are based on weight unless otherwise specified. Various chemical or physical properties were evaluated according to the following methods.

[Monomer Composition]

Regarding the monomer composition in the acrylic rubber, the monomer composition of each monomer unit in the acrylic rubber was confirmed by H-NMR, and existence of the activity of the reactive group remained in the acrylic rubber and the content of the reactive group were confirmed by the following test method. Further, the content ratio of each monomer unit in the acrylic rubber was calculated from the amount of each monomer used in the polymerization reaction and the polymerization conversion rate. Specifically, the content ratio of each monomer unit was regarded as the same as the amount of each monomer used, since the polymerization reaction was an emulsion polymerization reaction, and the polymerization conversion rate was about 100% in which no unreacted monomer could be confirmed.

[Reactive Group Content]

The content of the reactive group in the acrylic rubber bale was measured as the content in the acrylic rubber bale by the following method:

(1) The amount of carboxyl group was calculated by dissolving acrylic rubber bale in acetone and performing potentiometric titration with a potassium hydroxide solution.
(2) The amount of epoxy groups was calculated by dissolving acrylic rubber bale in methyl ethyl ketone, adding a specified amount of hydrochloric acid thereto to react with epoxy groups, and titrating the amount of residual hydrochloric acid with potassium hydroxide.
(3) The amount of chlorine was calculated by completely burning the acrylic rubber bale in a combustion flask, absorbing the generated chlorine in water, and titrating with silver nitrate.

[Ash Content]

The ash content (%) contained in the acrylic rubber bale was measured according to JIS K6228 A method.

[Ash Component Content]

The amount of each component (ppm) in the ash of the acrylic rubber bale was measured by XRF using a ZSX Primus (manufactured by Rigaku Co., Ltd.) by pressing the ash collected during the above-mentioned ash content measurement onto a titration filter paper having a diameter $\varphi$ of 20 mm.

[Specific Gravity]

The specific gravity of the acrylic rubber bale was measured according to JIS K6268 cross-linked rubber-method A of density measurement.

[Gel Amount]

The gel amount (%) of the acrylic rubber bale is the amount of insoluble matter in methyl ethyl ketone, and was determined by the following method:
About 0.2 g of acrylic rubber bale was weighed (X g), immersed in 100 ml of methyl ethyl ketone, left at room temperature for 24 hours, and then a filtrate obtained by filtering out the insoluble matter in methyl ethyl ketone using an 80 mesh wire net, that is, a filtrate in which only the rubber component soluble in methyl ethyl ketone was dissolved. The dry solid content (Y g) obtained by evaporating and drying and coagulating the filtrate was weighed and calculated by the following formula.

$$\text{Gel amount (\%)} = 100 \times (X\text{-}Y) / X$$

[Glass Transition Temperature (Tg)]

The glass transition temperature (Tg) of the acrylic rubber constituting the acrylic rubber bale was measured using a differential scanning calorimeter (DSC, product name "X-DSC7000", manufactured by Hitachi High-Tech Science Corporation).

[PH]

The pH of the acrylic rubber bale was measured with a pH electrode after dissolving 6 g ($\pm$ 0.05 g) of acrylic rubber bale in 100 g of tetrahydrofuran and adding 2.0 ml of distilled water to confirm that the acrylic rubber bale was completely dissolved.

[Water Content]

The water content (%) of the acrylic rubber bale was measured according to JIS K6238-1: Oven A (volatile content measurement) method.

[Molecular Weight and Molecular Weight Distribution]

The weight average molecular weight (Mw) and the molecular weight distribution (Mz / Mw) of the acrylic rubber constituting the acrylic rubber bale are an absolute molecular weight and an absolute molecular weight distribution, respectively, measured by the GPC-MALS method in which a solution in which 0.05 mol / L of lithium chloride and 0.01% of 37% concentrated hydrochloric acid are added to dimethylformamide is used as a solvent. To be specific, a multi-angle laser light scattering photometer (MALS) and a refractive index detector (RI) were incorporated into a GPC (Gel Permeation Chromatography) device, and the light scattering intensity and the difference in the refractive index of the molecular chain solution size-separated were measured by the GPC device by following the elution time, so that the molecular weight of the solute and its content rate were sequentially calculated and determined. Measurement conditions and measurement methods of the GPC device are as follows:

Column: TSKgel $\alpha$-M 2 pieces ($\varphi$7.8 mm$\times$30 cm, manufactured by Tosoh Corporation)
Column Temperature: 40°C
Flow Rate: 0.8 ml/mm
Sample Preparation: 5 ml of the solvent was added to 10 mg of the sample, and the mixture was gently stirred at room temperature (dissolution was visually confirmed). Thereafter, filtration was performed using a 0.5 $\mu$m filter.

[Complex Viscosity]

The complex viscosity $\eta$ at each temperature of the acrylic rubber bale was determined by measuring the temperature dispersion (40 to 120°C) at a strain of 473% and 1 Hz using a dynamic viscoelasticity measuring device "Rubber Process Analyzer RPA-2000" (manufactured by Alpha Technology Co., Ltd.). Here, of the above-mentioned dynamic viscoelasticities, the dynamic viscoelasticity at 60°C is defined as the complex viscosity $\eta$ (60°C), and the dynamic viscoelasticity at 100°C is defined as the complex viscosity $\eta$ (100°C), and the values of $\eta$ (100°C) / $\eta$ (60°C) and $\eta$ (60°C) / $\eta$ (100°C) were calculated.

[Moonie Viscosity (ML1+4,100°C)]

The Mooney viscosity (ML1+4,100°C) of the acrylic rubber bale was measured according to the JIS K6300 uncross-linked rubber physical test method.

[Processability Evaluation]

The processability of the rubber sample was measured by adding the rubber sample to a Banbury mixer heated to 50°C, kneading for 1 minute, and then adding the compounding agent A having the composition of the rubber mixture shown in Table 1 to obtain the first-stage rubber mixture. The time until the first-stage rubber mixture was integrated to show the maximum torque value, that is, BIT (Black Incorporation Time) was measured and evaluated by an index with Comparative Example 1 being 100 (the smaller the index, the better the processability).

[Storage Stability Evaluation]

Regarding the storage stability of the rubber sample, the rubber sample was put into a constant temperature and humidity chamber of 45°C × 80% RH (SH-222 manufactured by ESPEC CORP.), stored for 7 days, measured the processability (BIT) of the rubber sample before and after putting the rubber sample into the constant temperature and humidity chamber, calculated the BIT change rate before and after putting the rubber sample into the constant temperature and humidity chamber. The evaluation was made by an index where Comparative Example 1 being 100 (the smaller the index, the better the storage stability).

[Water Resistance Evaluation]

Regarding the water resistance of the rubber sample, the cross-linked product of the rubber sample was immersed in a distilled water at a temperature of 85°C for 100 hours in accordance with JIS-K6258 to perform an immersion test, and the volume change rate before and after immersion was calculated according to the following formula: The evaluation was performed by an index with Comparative Example 1 being 100 (the smaller the index, the more excellent in the water resistance).

$$\text{Volume change rate before and after immersion (\%)} = (\text{test piece volume after immersion -test piece volume before immersion) / test piece volume before immersion} \times 100.$$

[Example 1]

46 parts of pure water, 48.5 parts of ethyl acrylate, 29 parts of n-butyl acrylate, 21 parts of methoxyethyl acrylate, and 1.5 parts of vinyl chloroacetate, together with 0.709 parts of sodium lauryl sulfate and 1.82 parts of polyoxyethylene dodecyl ether (molecular weight 1500) as an emulsifier were charged in a mixing container provided with a homomixer, and stirred, thereby to obtain a monomer emulsion.

Subsequently, 170 parts of pure water and 3 parts of the above-mentioned monomer emulsion obtained by emulsion polymerization were put into a polymerization reaction tank provided with a thermometer and a stirrer, and cooled to 12°C under a nitrogen stream. Subsequently, the rest of the monomer emulsion, 0.00033 part of ferrous sulfate, 0.264 part of sodium ascorbate, and 0.22 part of potassium persulfate were continuously dropped into the polymerization reaction tank over 3 hours. Thereafter, the reaction was continued while maintaining the temperature in the polymerization reaction tank at 23°C, and upon the confirmation that the polymerization conversion rate reached about 100%, hydroquinone as a polymerization terminator was added to terminate the polymerization reaction and the emulsion polymerization liquid was obtained.

In a coagulation tank provided with a thermometer and a stirring device, 2% sodium sulfate aqueous solution (coagulant liquid) was heated to 80°C and vigorously stirred (rotation speed of 600 rpm, peripheral speed of 3.1 m/s). The obtained above emulsion polymerization liquid heated to 80°C was continuously added to the sodium sulfate aqueous solution, so that the polymer was coagulated, and filtered to obtain the hydrous crumbs.

Subsequently, added 194 parts of hot water (70°C) to the coagulation tank and stirred for 15 minutes, and thereafter discharged water, and again added 194 parts of hot water (70°C), stirred for 15 minutes and washed the hydrous crumbs. The washed hydrous crumbs (hydrous crumbs temperature 65°C) were supplied to the screw-type extruder, dehydrated and dried, and extruded the sheet-shaped dry rubber in the width of 300 mm and the thickness of 10 mm. Subsequently, cooled the sheet-shaped dry rubber at the cooling rate of 200°C / hr, using the conveyor-type cooling device directly connected to the screw-type extruder 15.

The screw-type extruder used in this Example 1 is constituted by one feed barrel, three dehydration barrels (first to third dehydration barrels), and five drying barrels (first to fifth drying barrels). The first and the second dehydration barrels are configured to perform drainage, while the third dehydration barrel is configured to perform steam exhausting. The operating conditions of the screw-type extruder were as follows.

Water Content:

- Water content of hydrous crumbs after drainage in the second dehydration barrel: 20%
- Water content of hydrous crumbs after steam exhausting in the third dehydration barrel: 10%
- Water content of hydrous crumbs after drying in the fifth dehydration barrel: 0.4% Rubber Temperature:
- Temperature of the hydrous crumbs supplied to the first supply barrel: 65°C
- Temperature of the rubber discharged from the screw-type extruder: 140°C

Set Temperature of Each Barrel:

- First dehydration barrel: 90°C
- Second dehydration barrel: 100°C
- Third dehydration barrel: 120°C
- First drying barrel: 120°C
- Second drying barrel: 130°C
- Third drying barrel: 140°C
- Fourth drying barrel: 160°C
- Fifth drying barrel: 180°C

Operating Conditions:

- Screw diameter (D) in the barrel section: 132 mm
- Total length of screw (L) in the barrel section: 4620 mm
- L/D: 35
- Screw rotation speed in the barrel section: 135 rpm
- Extrusion rate of rubber from die: 700 kg / hr
- Resin pressure in the die: 2 MPa

The sheet-shaped dry rubber extruded from the screw-type extruder was cooled to 50°C, cut with a cutter, and laminated so as to be 20 parts (20 kg) before the temperature becomes 40°C or lower, thereby to obtained acrylic rubber bale (A). Reactive group content, ash content, ash component content, specific gravity, gel amount, glass transition temperature (Tg), pH, water content, molecular weight, molecular weight distribution, complex viscosity, and Mooney viscosity (ML1+4,100°C) of the obtained acrylic rubber bale (A), were measured and their results are shown in Table 2. Further, the value of "water content after dehydration (drainage) (%)" shown in the dehydration process column of Table 2 is the water content of the hydrous crumbs immediately after the drainage by the drainage-type dehydration barrel (immediately before the steam exhausting-type dehydration barrel).

Then, using a Banbury mixer, 100 parts of the acrylic rubber bale (A) and the compounding agent A of "Composition 1" shown in Table 1 were added and mixed at 50°C for 5 minutes. At this time, processability of the acrylic rubber bale was evaluated, and storage stability was evaluated, and the result is shown in Table 2. Further, the obtained mixture was transferred to a roll at 50°C, and the compounding agent B of "Composition 1" was combined and mixed to obtain a rubber mixture.

[Table 1]

| Combination of acrylic rubber mixture | | | | |
|---|---|---|---|---|
| Reactive Group | | Halogen Group | Epoxy Group | Carboxyl Group |
| Composition (Parts) | | Composition 1 | Composition 2 | Composition 3 |
| Compounding Agent A | Acrylic Rubber Bale or Crumb | 100 | 100 | 100 |
| | SEAST3(HAF) ※1 | 60 | 60 | 60 |
| | Stearic Acid | 1 | 1 | 1 |
| | Ester Wax | 1 | 1 | 1 |
| | NOCRAC CD ※2 | 2 | 2 | 2 |
| Compounding Agent B | Hexamethylenediamine carbamate | - | - | 0.5 |
| | Rhenogran®XLA-60 ※3 (Synthetic mixture of active amine and retarder) | - | - | 2 |
| | Ammonium benzoate | - | 1.5 | - |
| | Zinc dibutyldithiocarbamate | 1.5 | - | - |
| | 2,4,6-Trimercapto-s-triazine | 0.5 | - | - |
| | N- (cyclohexylthio) phthalimide | 0.2 | - | - |
| | Diethylthiourea | 0.3 | - | - |
| ※1: SEAST3 (HAF) in the table is carbon black (made by Tokai Carbon Co., Ltd.). | | | | |
| ※2: The Nocrac CD in the table is 4,4'-bis ($\alpha$, $\alpha$-dimethyl benzyl) diphenylamine : made by OUCHI SHINKO CHEMICAL INDUSTRIAL CO.,LTD.). | | | | |
| ※'3: Rhenogran® XLA-60 in the table is a vulcanization accelerator (made by LANXESS CO.,LTD.). | | | | |

Thereafter, the obtained rubber mixture was put into a mold having a length of 15 cm, a width of 15 cm, and a depth of 0.2 cm, and the pressed for 10 minutes at 180°C while applying a pressure of 10 MPa, thereby to perform a primary cross-linking, and then the obtained primary cross-linked product is further heated in a gear oven under the conditions of 180°C for 2 hours to perform secondary cross-linking, thereby to obtain a sheet-shaped rubber cross-linked product. Thereafter, a 3 cm × 2 cm × 0.2 cm test piece was cut from the obtained sheet-shaped rubber cross-linked product, and a water resistance test was performed. The results are shown in Table 2.

[Example 2]

An acrylic rubber bale (B) was obtained in the same manner as in Example 1 except that the monomer component was changed to 98.5 parts of ethyl acrylate and 1.5 parts of vinyl chloroacetate, and the temperature of the first dehydration barrel of the screw-type extruder was changed to 100°C, and the temperature of the second dehydration barrel was changed to 120°C, drainage was performed in the first dehydration barrel only, and the water content ratio of the hydrous crumbs after drainage in the first dehydration barrel was changed to 30%, and each property was evaluated. The results are shown in Table 2.

[Example 3]

An acrylic rubber bale (C) was obtained in the same manner as in Example 2 except that the monomer component was changed to 43 parts of ethyl acrylate, 25 parts of n-butyl acrylate, 26 parts of methoxyethyl acrylate, 2 parts of acrylonitrile and 4 parts of allylglycidyl ether, and each property (the compounding agent was replaced with "Composition 2") was evaluated. The results are shown in Table 2.

[Example 4]

An acrylic rubber bale (D) was obtained in the same manner as in Example 2, except that the monomer component was changed to 4.5 parts of ethyl acrylate, 64.5 parts of n-butyl acrylate, 39.5 parts of methoxyethyl acrylate, and 1.5 parts of mono-n-butyl fumarate, and each property (the compounding agent was changed to "Composition 3") was evaluated. The results are shown in Table 2.

[Example 5]

An acrylic rubber bale (E) was obtained in the same manner as in Example 2, except that the monomer component was changed to 42.2 parts of ethyl acrylate, 35 parts of n-butyl acrylate, 20 parts of methoxyethyl acrylate, 1.5 parts of acrylonitrile, and 1.3 parts of vinyl chloroacetate, and each property was evaluated. The results are shown in Table 2.

[Comparative Example 1]

An acrylic rubber bale (F) having 0.4% by weight of water content ratio was obtained by adding 0.7% sodium sulfate aqueous solution to an emulsified polymer solution (rotation speed 100 rpm, peripheral speed 0.5 m/s) subjected to emulsification polymerization in the same manner as in Example 5 to generate hydrous crumbs, adding 194 parts of industrial water to 100 parts of the generated hydrous crumbs, stirring in the coagulation tank at 25°C for 5 minutes, performing four times of washing of the hydrous crumbs to discharge water from the coagulation tank, and then adding 194 parts of pH 3 sulfuric acid aqueous solution, stirring at 25°C for 5 minutes, discharging water from the coagulation tank, performing acid washing once, adding 194 parts of pure water, performing pure water washing once, and then drying the washed hydrous crumbs by a hot air dryer at 160°C. Each property of the obtained crumb-shaped acrylic rubber (F) was evaluated and shown in Table 2.

[Reference Example 1]

An acrylic rubber (G) having 0.4% by weight of water content was obtained by performing up to the washing process in the same manner as in Example 5 and then drying the washed hydrous crumbs by a hot air dryer at 160°C. Each property of the obtained crumb-shaped acrylic rubber (G) was evaluated and shown in Table 2.

[Table 2]

| | Example 1 | Example 2 | Example 3 | Example 4 | Example 5 | Comparative Example 1 | Reference Example 1 |
|---|---|---|---|---|---|---|---|
| Type of Acrylic Rubber Bale or Crumb | (A) | (B) | (C) | (D) | (E) | (F) | (G) |
| Reactive group type | Chlorine | Chlorine | Epoxy Group | Carboxyl Group | Chlorine | Chlorine | Chlorine |
| Reactive group content (%) | 0.3 | 0.31 | 0.4 | 0.31 | 027 | 0.27 | 0.27 |
| **Monomeric unit Composition of Acrylic Rubber (%)** | | | | | | | |
| Ethyl acrylate | 48.5 | 98.5 | 43 | 4.5 | 42.2 | 42.2 | 42.2 |
| n-butyl acrylate | 29 | - | 25 | 64.5 | 35 | 35 | 35 |
| Methoxyethyl acrylate | 21 | - | 26 | 39.5 | 20 | 20 | 20 |
| Acrylonitrile | - | - | 2 | - | 1.5 | 1.5 | 1.5 |
| Mono-n-butyl fumarate | | - | - | 1.5 | - | - | - |
| Allyl glycidyl ether | | | 4 | | | - | - |
| Chlorovinyl acetate | 1.5 | 1.5 | - | - | 1.3 | 1.3 | 1.3 |
| **Emulsifier (Parts)** | | | | | | | |
| Lauryl sulfate sodium salt | 0.709 | 0.709 | 0.709 | 0.709 | 0,709 | 0.709 | 0.709 |
| Polyoxyethylene dodecyl ether | 1.82 | 1.82 | 1.82 | 1.82 | 1.82 | 1.82 | 1.82 |
| **Coagulation Process** | | | | | | | |
| Coagulant | Na,SO. | $Na_2SQ_4$ | $Na_2SO_4$ | $Na_2SQ_4$ | $Na_2SO_4$ | $Na_2SO_4$ | $Na_2SQ_4$ |
| Coagulant concentration (%) | 2 | 2 | 2 | 2 | 2 | 0.7 | 2 |
| Method of addition | Lx ↓ | Lx ↓ | Lx ↓ | Lx ↓ | Lx ↓ | Coa ↓ | Lx ↓ |
| Stirring speed (rpm) | 600 | 600 | 600 | 600 | 600 | 100 | 600 |
| Peripheral speed (m/s) | 3.1 | 3.1 | 3.1 | 3.1 | 3.1 | 0.5 | 3.1 |
| **Washing Process** | | | | | | | |
| ※ Water temperature (°C) | 70 | 70 | 70 | 70 | 70 | 25 | 70 |
| Number of washings | 2 | 2 | 2 | 2 | 2 | 4+1+1 | 2 |
| **Dehydration Process** | Yes | Yes | Yes | Yes | Yes | No | No |
| Water content (%) after dehydration (drainage) | 20 | 30 | 30 | 30 | 30 | | |

(continued)

| | Example 1 | Example 2 | Example 3 | Example 4 | Example 5 | Comparative Example 1 | Reference Example 1 |
|---|---|---|---|---|---|---|---|
| Product Shape | Bale | Bale | Bale | Bale | Bale | Crumb | Crumb |
| Ash Properties of Acrylic Rubber Bale or Crumb | | | | | | | |
|   Ash Content (%) | 0.064 | 0.083 | 0.082 | 0.085 | 0.090 | 0.285 | 0.185 |
|   Ash Content | | | | | | | |
|     P (ppm) | 2 | 3 | 4 | 4 | 4 | 15 | 10 |
|     Mg(ppm) | 7 | 11 | 12 | 10 | 10 | 10 | 2 |
|     Na (ppm) | 265 | 344 | 343 | 354 | 372 | 1390 | 766 |
|     Ca (ppm) | 6 | 8 | 18 | 16 | 16 | 20 | 10 |
|     S (ppm) | 329 | 417 | 408 | 415 | 456 | 1200 | 911 |
|     Na+S (% in ash) | 93 | 91 | 91 | 90 | 92 | 91 | 91 |
|     Na/S (ratio) | 0.81 | 0.82 | 0.84 | 0.85 | 0.82 | 1.16 | 0.84 |
| Property Values of Acrylic Rubber Bale or Crumb | | | | | | | |
|   Specific gravity | 1.074 | 1.086 | 1.064 | 1.074 | 1.059 | ' 0.713 ' | 0.759 |
|   Gel amount (%) | 1.5 | 1.9 | 2.5 | 3.4 | 2.4 | 70.5 | 65.8 |
|   Tg(°C) | -30 | -1.5 | -23 | -38 | -29 | -29 | -29 |
|   pH | 4.3 | 3.9 | 4.4 | 4.6 | 4.5 | 3.1 | 4.5 |
|   Water content (%) | 0.4 | 0.4 | 0.4 | 0,3 | 0.4 | 0,4 | 0.4 |
|   Mw/1000 | 1420 | 1520 | 1450 | 1380 | 1480 | 1480 | 1480 |
|   Mz/Mw | 1.67 | 1.72 | 1.75 | 1.69 | 1.74 | 1.74 | 1.74 |
|   $\eta$ (100°C) (Pa·s) | 3108 | 3422 | 2945 | 3124 | 2995 | 2990 | 3005 |
|   $\eta$ (60°C) (Pa·s) | 3541 | 4059 | 3246 | 3360 | 3450 | 3380 | 3450 |
|   Viscosity ratio $\eta$ (60°C) / $\eta$ (100°C) | 1.14 | 1.19 | 1.1 | 1.08 | 1.15 | 1.17 | 1.15 |
|   Viscosity ratio $\eta$ (100°C) / $\eta$ (60°C) | 0.88 | 0.84 | 0.91 | 0.93 | 0.87 | 0.86 | 0.87 |
|   Mooney viscosity (ML1+4, 100°C) | 33 | 53 | 35 | 33 | 34 | 34 | 34 |
| Property Evaluation of Acrylic Rubber Bale or Crumb | | | | | | | |

(continued)

| | | Example 1 | Example 2 | Example 3 | Example 4 | Example 5 | Comparative Example 1 | Reference Example 1 |
|---|---|---|---|---|---|---|---|---|
| | Processability Test (50°C) BIT (index) | 21 | 22 | 22 | 23 | 22 | 100 | 95 |
| | Storage Stability (45°C x 80%RH × 7days) BIT change rate (index) | 10 | 14 | 16 | 17 | 15 | 100 | 87 |
| | Water Resistance Test (85°C x 100hr) Volume change rate (index) | 26 | 30 | 20 | 21 | 35 | 100 | 56 |

※ In the table, L× ↓ indicates that the emulsion polymerization liquid was added to the coagulant liquid, and Coa ↓ indicates that the coagulant liquid was added to the emulsion polymerization liquid.

From Table 2, it can be understood that the acrylic rubber bales (A) to (E), comprising: an acrylic rubber having a reactive group, wherein an ash content is 0.2% by weight or less, and a ratio of a total content of at least one element selected from the group consisting of sodium, sulfur, calcium, magnesium and phosphorus in the ash with respect to the total ash content is at least 50% by weight, and the specific gravity is 0.9 or more, are excellent in storage stability, water resistance, and processability (Examples 1 to 5).

Further, from Table 2, it can be understood that when the hydrous crumbs are generated by adding the coagulant liquid to the emulsion polymerization liquid in the coagulation reaction, the ash content is not reduced so that the water resistance is not sufficient, even though four times of water washing, one acid washing, and one pure water washing are performed in the washing process (Comparative Example 1). On the other hand, when the hydrous crumbs are generated by adding the emulsion polymerization liquid in the high concentration coagulant liquid being stirred vigorously to some extent in the coagulation reaction, the ash content is reduced to some extent only by washing two times by hot water, so that the water resistance is improved (Reference Example 1).

Further, looking at the relationship between the amount of sodium (Na) and the amount of sulfur (S) in the ash in Table 2, it can be understood that when the coagulation method and the washing method of the Reference Example 1 are adopted as compared with Comparative Example 1, the amount of sodium (Na) is reduced with the result that the Na / S ratio is reduced, even though the total (Na+S) amount of sodium (Na) and sulfur (S) has not changed. This is conjectured to be because even though most of the coagulant (sodium sulfate: Na2SO4: Na ratio is large) used by the coagulation and washing method of Reference Example 1 is almost removed, sodium (Na) and sulfur (S) derived from the emulsifier (sodium lauryl sulfate: NaC12H25SO4) are inherent in the hydrous crumbs and cannot be sufficiently removed by washing.

Further, from Table 2, it can be understood that even though the method of Reference Example 1 shows some improvement in water resistance and storage stability, further improvement is desired, and processability needs to be greatly improved.

In contrast with these, it can be understood that the ash content in the acrylic rubber bale is greatly reduced so that all the properties of water resistance, storage stability and processability are remarkably improved (Examples 1 to 5), by performing the coagulation reaction in the same manner as in Reference Example 1, washing twice with hot water, and then dehydrating and drying to a water content of less than 1% by weight by the screw-type extruder. Here, it can be read that improvement of the water resistance is the effect of significantly reducing the ash content by dehydration drying with a screw-type extruder (assuming that the Na / S ratio is within a specific ratio). Regarding storage stability and processability, it can be understood that changes that cannot be explained only by the ash content and the ash component ratio are occurring in the screw-type extruder.

Further, from Table 2, it can be understood that the crumb-shaped acrylic rubber obtained by drying the washed hydrous crumbs by hot air is sticky and loosely lumpy, and its specific gravity is as small as between 0.7 and 0.8 and is in a state of entrapping air (Comparative Example 1 and Reference Example 1). In contrast, it can be understood that the all of the acrylic rubber bales obtained by drying, forming into sheet shape, and laminating by a screw-type extruder, have specific gravity as high as between 1.0 and 1.1 and are in a state containing almost no air, and remarkably excellent in storage stability (Examples 1 to 5). This can be considered that the acrylic rubber bale remarkably excellent in storage stability was produced due to that fact that: the hydrous crumbs were securely dried up to the state containing substantially no water in the drying barrel section and then melt-kneaded, by the conditions of the screw-type extruder performed in Examples, for example, the temperature of the hydrous crumbs to be charged, the water content in the dehydration barrel section, the set temperature in the drying barrel section and the degree of decompression, and the like; the acrylic rubber sheet with less air entrapment (large specific gravity) was created due to the resin pressure of the die portion, the temperature of the extruded sheet-shaped dry rubber, and the temperature of the sheet-shaped dry rubber during cutting; and it was possible to produce the acrylic rubber bale using the acrylic rubber sheet with less air entrapment and by a laminating method that allows air to easily escape.

From Table 2, further, it can be understood that even though the amount of gel insoluble in methyl ethyl ketone of the crumb-shaped acrylic rubber obtained by drying the washed hydrous crumbs by hot air is large (Comparative Example 1 and Reference Example 1), the gel amount of all the amount of gel insoluble in methyl ethyl ketone of the acrylic rubber bale obtained by drying, forming into sheet shape and laminating by the screw-type extruder is reduced to 5% or less and the processability is remarkably improved (Examples 1 to 5). This can be considered that the amount of gel insoluble in methyl ethyl ketone of the acrylic rubber sharply increased because the polymerization reaction was performed up to the polymerization conversion ratio of approximately 100% in the emulsion polymerization, causing the crumb-shaped acrylic rubber obtained by hot air drying to have a large gel amount as it was, however, by controlling the temperature of the hydrous crumbs to be charged, the water content in the dehydration barrel section, the set temperature in the drying barrel section and the degree of decompression, and the like in the screw-type extruder, it became possible to dry the hydrous crumbs up to the state containing substantially no water in the drying barrel section and then melt-kneaded, so that the gel insoluble in methyl ethyl ketone sharply increased in the polymerization reaction disappeared.

From Table 2, it can be understood that the weight average molecular weight (Mw) of the acrylic rubber bale of the present invention exceeds one million, and the ratio (Mz / Mw) of the z average molecular weight (Mz) and the weight average molecular weight (Mw) with an emphasis on the high molecular weight region is much larger than 1.3, so that the strength properties of the acrylic rubber bale are maintained to ensure workability.

[EXPLANATION OF REFERENCE NUMERALS]

1 Acrylic Rubber Production System
3 Coagulation Device
4 Washing Device
5 Screw-Type Extruder
6 Cooling Device
7 Baling Device

**Claims**

1. An acrylic rubber bale comprising an acrylic rubber having a reactive group, wherein

   an ash content is 0.2% by weight or less,
   a ratio of a total content of at least one element selected from the group consisting of sodium, sulfur, calcium, magnesium, and phosphorus in the ash with respect to a total ash content is at least 50% by weight,
   a specific gravity is 0.9 or more.

2. The acrylic rubber bale according to claim 1, wherein
   the specific gravity is in the range of 1 to 1.2.

3. The acrylic rubber bale according to claim 1 or 2, wherein
   a total amount of sodium and sulfur in the ash is 50% by weight or more with respect to the total ash content.

4. The acrylic rubber bale according to any one of claims 1 to 3, wherein
   a total amount of sodium and sulfur in the ash is 90% by weight or more with respect to the total ash content.

5. The acrylic rubber bale according to any one of claims 1 to 4, wherein
   the ratio of sodium to sulfur in the ash ([Na] / [S]) is preferably in the range of 0.4 to 2.5 by weight.

6. The acrylic rubber bale according to any one of claims 1 to 5, wherein
   the ratio of sodium to sulfur in the ash ([Na] / [S]) is more preferably in the range of 0.7 to 1 by weight.

7. The acrylic rubber bale according to any one of claims 1 to 6, wherein
   the weight average molecular weight (Mw) of the acrylic rubber is preferably in the range of 100,000 to 5,000,000.

8. The acrylic rubber bale according to any one of claims 1 to 7, wherein
   the ratio (Mz / Mw) of the z average molecular weight (Mz) and the weight average molecular weight (Mw) of the acrylic rubber is 1.3 or more.

9. The acrylic rubber bale according to any one of claims 1 to 8, wherein
   the complex viscosity ([η] 60°C) at 60°C is 15,000 Pa·s or less.

10. The acrylic rubber bale according to any one of claims 1 to 9, wherein
    the ratio ([η] 100°C / [η] 60°C) of the complex viscosity ([η] 100°C) at 100°C to the complex viscosity ([η] 60°C) at 60°C is 0.5 or more.

11. The acrylic rubber bale according to any one of claims 1 to 10, wherein
    the ratio ([η] 100°C / [η] 60°C) of the complex viscosity ([η] 100°C) at 100°C to the complex viscosity ([η] 60°C) at 60°C is 0.83 or more.

12. The acrylic rubber bale according to any one of claims 1 to 11, wherein
the amount of gel insoluble in methyl ethyl ketone is 50% by weight or less.

13. The acrylic rubber bale according to any one of claims 1 to 12, wherein
the water content is less than 1% by weight.

14. A method for producing an acrylic rubber bale, the method comprising:

an emulsion polymerization process to emulsify a monomer component containing a (meth) acrylic acid ester and a monomer having a reactive group with water and an emulsifier, and to emulsion-polymerize the emulsified monomer component in the presence of a polymerization catalyst to obtain an emulsion polymerization liquid;
a coagulation process to generate hydrous crumbs by contacting the obtained emulsion polymerization liquid with a coagulant liquid consisting of an aqueous solution of a coagulant;
a washing process to wash the generated hydrous crumbs;
a dehydration/drying/molding process to dehydrate the washed hydrous crumbs to a water content of 1 to 40% by weight in a dehydration barrel, to dry the dehydrated hydrous crumbs to obtain a dry rubber having a water content of less than 1% by weight in a drying barrel, and to extrude a sheet-shaped dry rubber from a die, by using a screw-type extruder provided with the dehydration barrel having a dehydration slit, the drying barrel under reduced pressure, and the die at a top thereof; and
a baling process to laminate and bale the extruded sheet-shaped dry rubber.

15. The method for producing an acrylic rubber bale according to claim 14, wherein
the emulsifier is a sulfate ester salt and the coagulant is a sodium salt.

16. The method for producing an acrylic rubber bale according to claim 14 or 15, wherein
the contact between the emulsion polymerization solution and the coagulant liquid is achieved by adding the emulsion polymerization solution to the coagulant liquid being stirred.

17. The method for producing an acrylic rubber bale according to claim 16, wherein
the peripheral speed of the coagulant liquid being stirred is 0.5 m/s or more.

18. The method for producing an acrylic rubber bale according to any one of claims 14 to 17, wherein
the temperature of the hydrous crumb supplied to the screw-type extruder is in the range of 50 to 90°C.

19. The method for producing an acrylic rubber bale according to any one of claims 14 to 18, wherein
the degree of decompression of the drying barrel section of the screw-type extruder is in the range of 1 to 50 kPa.

20. The method for producing an acrylic rubber bale according to any one of claims 14 to 19, wherein
the set temperature of the drying barrel section of the screw-type extruder is 100 to 250°C.

21. The method for producing an acrylic rubber bale according to any one of claims 14 to 20, wherein
the resin pressure of the die portion of the screw-type extruder is in the range of 0.1 to 10MPa.

22. The method for producing an acrylic rubber bale according to any one of claims 14 to 21, wherein
the sheet-shaped dry rubber is laminated after the sheet-shaped dry rubber is cut.

23. The method for producing an acrylic rubber bale according to claim 22, wherein
the sheet-shaped dry rubber is cut at a sheet-shaped dry rubber temperature of 60°C or lower.

24. The method for producing an acrylic rubber bale according to any one of claims 14 to 23, wherein
the sheet-shaped dry rubber is laminated at a sheet-shaped dry rubber temperature of 30°C or higher.

25. A rubber mixture obtained by mixing the acrylic rubber bale according to any one of claims 1 to 13 with a filler and a cross-linking agent.

26. A method for producing a rubber mixture, wherein the acrylic rubber bale according to any one of claims 1 to 13 is mixed with a filler and a cross-linking agent by a mixer.

27. A method for producing a rubber mixture, wherein the acrylic rubber bale according to any one of claims 1 to 13 is mixed with a filler and thereafter a cross-linking agent is mixed.

28. A rubber cross-linked product obtained by cross-linking the rubber mixture according to claim 25.

FIG.1

FIG.2

FIG.3

**EP 4 001 324 A1**

<div style="text-align:center">

**INTERNATIONAL SEARCH REPORT**

</div>

| | International application No. |
|---|---|
| | PCT/JP2020/022319 |

### A. CLASSIFICATION OF SUBJECT MATTER

Int.Cl. C08F20/18(2006.01)i, C08C1/15(2006.01)i, C08L33/08(2006.01)i, C08L33/10(2006.01)i
FI: C08F20/18, C08L33/08, C08L33/10, C08C1/15
According to International Patent Classification (IPC) or to both national classification and IPC

### B. FIELDS SEARCHED

Minimum documentation searched (classification system followed by classification symbols)
Int.Cl. C08F20/18, C08C1/15, C08L33/08, C08L33/10

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | WO 2018/139466 A1 (ZEON CORPORATION) 02.08.2018 (2018-08-02), paragraphs [0083], [0095], [0118], [0119], production example 3, example 3, tables 1, 2 | 1-8, 13, 25-28<br>9-12, 14-24 |
| Y<br>A | WO 2018/116828 A1 (ZEON CORPORATION) 28.06.2018 (2018-06-28), paragraph [0058] | 1-8, 13, 25-28<br>9-12, 14-24 |
| Y<br>A | JP 2006-328239 A (ZEON CORPORATION) 07.12.2006 (2006-12-07), paragraph [0002] | 1-8, 13, 25-28<br>9-12, 14-24 |
| A | WO 2018/143101 A1 (ZEON CORPORATION) 09.08.2018 (2018-08-09) | 1-28 |

☐ Further documents are listed in the continuation of Box C.          ☒ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 20.08.2020 | 01.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/022319

| | | |
|---|---|---|
| WO 2018/139466 A1 02.08.2018 | EP 3575345 A1<br>production example 3, example 3, tables 1, 2<br>SG 11201906761P A<br>CN 110198971 A<br>KR 10-2019-0104171 A<br>TW 201833145 A | |
| WO 2018/116828 A1 28.06.2018 | (Family: none) | |
| JP 2006-328239 A 07.12.2006 | (Family: none) | |
| WO 2018/143101 A1 09.08.2018 | US 2020/0002523 A1<br>EP 3578580 A1<br>SG 11201906829S A<br>CN 110234667 A<br>KR 10-2019-0109417 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006328239 A
- WO 2018116828 A
- WO 2018079783 A
- JP H1225512 B